(19) Europäisches Patentamt
European Patent Office
Office européen des brevets

(11) **EP 3 245 650 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(21) Anmeldenummer: **16790573.6**

(22) Anmeldetag: **31.10.2016**

(51) Int Cl.:
***G10K 11/178*** (2006.01)

(86) Internationale Anmeldenummer:
**PCT/EP2016/076248**

(87) Internationale Veröffentlichungsnummer:
**WO 2017/174165 (12.10.2017 Gazette 2017/41)**

(54) **SYSTEM UND VERFAHREN ZUR AKTIVEN SCHALLBEEINFLUSSUNG**

SYSTEM AND METHOD FOR ACTIVE SOUND INFLUENCING

SYSTÈME ET PROCÉDÉ POUR INFLUER ACTIVEMENT SUR UN SON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2016 DE 102016106326**
**06.04.2016 DE 102016106325**

(43) Veröffentlichungstag der Anmeldung:
**22.11.2017 Patentblatt 2017/47**

(73) Patentinhaber: **Eberspächer Exhaust Technology GmbH & Co. KG**
**66539 Neunkirchen (DE)**

(72) Erfinder:
• **KOCH, Viktor**
**73207 Plochingen (DE)**

• **BUGANZA, Federico**
**73730 Esslingen (DE)**

(74) Vertreter: **Diehl & Partner GbR**
**Patentanwälte**
**Erika-Mann-Strasse 9**
**80636 München (DE)**

(56) Entgegenhaltungen:
**US-A1- 2005 024 134    US-A1- 2005 207 585**

• **KUO S M ET AL: "ACTIVE NOISE CONTROL: A TUTORIAL REVIEW", PROCEEDINGS OF THE IEEE, IEEE. NEW YORK, US, Bd. 87, Nr. 6, 1. Juni 1999 (1999-06-01), Seiten 943-973, XP011044219, ISSN: 0018-9219, DOI: 10.1109/5.763310**

**Beschreibung**

Die vorliegende Erfindung betrifft ein System und ein Verfahren zur aktiven Schallbeeinflussung. Der zu beeinflussende Schall kann dabei beispielsweise in einer Abgasanlage oder einer Ansauganlage einer Verbrennungskraftmaschine eines Fahrzeugs geführt werden. Dann stellt die Verbrennungskraftmaschine die Geräuschquelle des zu beeinflussenden Schalls dar.

Abgasanlagen für Verbrennungskraftmaschinen sind herkömmlich aus passiven Komponenten aufgebaut, die in allen Betriebssituationen insgesamt von Abgas durchströmt werden und zusammen die Abgasanlage bilden. Bei diesen Komponenten kann es sich neben einem oder mehreren Leitungsstücken beispielsweise um einen oder mehrere Turbolader, einen oder mehrere Katalysatoren und/oder einen oder mehrere Schalldämpfer handeln. Ansauganlagen für Verbrennungskraftmaschinen werden entsprechend in allen Betriebssituationen von Luft durchströmt und weisen üblicherweise einen oder mehrere Filter, Ventile und Verdichter auf.

In jüngerer Zeit wurde begonnen, Abgasanlagen und Ansauganlagen um Systeme zur aktiven Beeinflussung von in der Abgasanlage bzw. Ansauganlage geführtem, auf den Betrieb einer Verbrennungskraftmaschine zurückzuführendem Geräusch zu ergänzen. Derartige Systeme überlagern das in der Abgasanlage bzw. Ansauganlage geführte, wesentlich durch die Verbrennungskraftmaschine erzeugte Geräusch mit künstlich erzeugten Schallwellen, welcher das in der Abgasanlage bzw. Ansauganlage geführte Geräusch dämpft oder verändert. Im Ergebnis soll ein nach außerhalb der Abgasanlage bzw. Ansauganlage abgegebener Schall zum Image eines jeweiligen Herstellers passen, Kunden ansprechen und gesetzliche Grenzwerte einhalten.

Dies erfolgt dadurch, dass wenigstens ein Schallerzeuger vorgesehen ist, der mit der Abgasanlage bzw. Ansauganlage in Fluidverbindung steht und so Schall in das Innere der Abgasanlage bzw. Ansauganlage einstrahlt. Dieser künstlich erzeugte Schall und der von der Verbrennungskraftmaschine erzeugte Schall überlagern sich und treten gemeinsam aus der Abgasanlage bzw. Ansauganlage aus. Derartige Systeme können auch zur Schalldämpfung eingesetzt werden. Zum Erzielen einer vollständigen destruktiven Interferenz der Schallwellen des in der Abgasanlage bzw. Ansauganlage geführten Geräuschs und des vom Schallerzeuger erzeugten Schalls müssen die vom Lautsprecher herrührenden Schallwellen nach Amplitude und Frequenz den in der Abgasanlage bzw. Ansauganlage geführten Schallwellen entsprechen, relativ zu diesen jedoch eine Phasenverschiebung von 180 Grad aufweisen. Entsprechen sich die in der Abgasanlage bzw. Ansauganlage geführten Schallwellen, welche auf den Betrieb des Verbrennungsmotors zurückzuführen sind, und die vom Lautsprecher erzeugten Schallwellen zwar in der Frequenz und weisen sie relativ zueinander eine Phasenverschiebung von 180 Grad auf, entsprechen sich die Schallwellen aber nicht in der Amplitude, kommt es nur zu einer Abschwächung des aus der Abgasanlage bzw. Ansauganlage ausgegebenen Geräuschs.

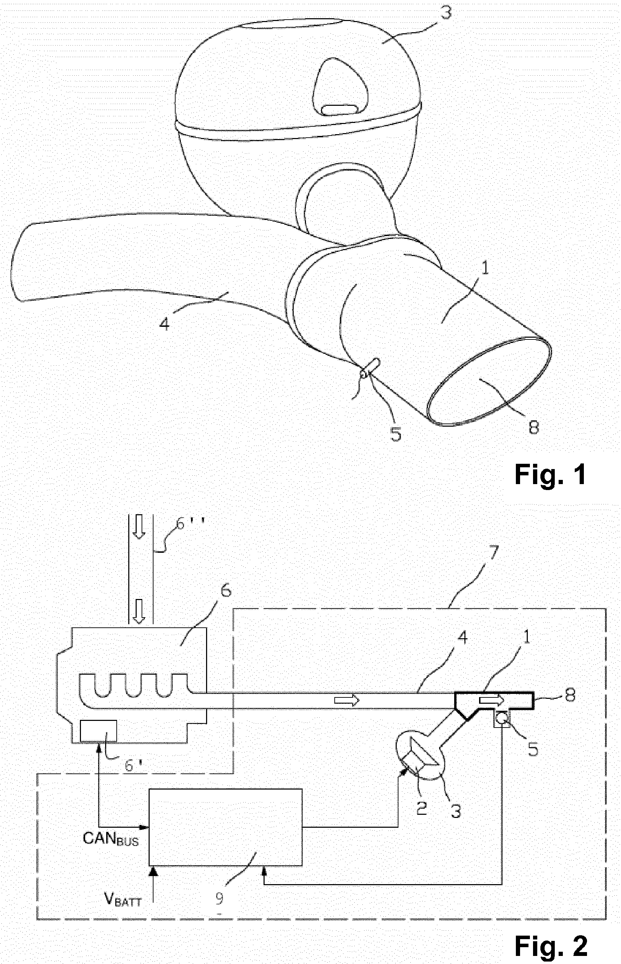

Eine Abgasanlage mit einem System zur aktiven Beeinflussung von in der Abgasanlage geführtem Schall aus dem Stand der Technik wird nachfolgend unter Bezugnahme auf die Figuren 1 und 2 beschrieben:
Eine Abgasanlage 4 mit einem System 7 zur aktiven Beeinflussung von in der Abgasanlage 4 geführtem Schall weist einen Schallerzeuger 3 in Form eines schallisolierten Gehäuses auf, welches einen Lautsprecher 2 enthält und im Bereich eines Endrohrs 1 über eine Schallleitung an die Abgasanlage 4 angebunden ist. Das Endrohr 1 weist eine Mündung 8 auf, welche in der Abgasanlage 4 geführtes Abgas und in der Abgasanlage 4 geführten Luftschall nach außen abgibt. An dem Endrohr 1 ist ein Fehlermikrofon 5 vorgesehen. Das Fehlermikrofon 5 misst Schall im Inneren des Endrohrs 1. Diese Messung mittels des Fehlermikrofons 5 erfolgt in einem Abschnitt stromabwärts eines Bereichs, in dem die Schallleitung in die Abgasanlage 4 mündet und damit die fluide Anbindung zwischen Abgasanlage 4 und Schallerzeuger 3 bereitgestellt wird. Dabei ist der Begriff "stromabwärts" auf die Strömungsrichtung des Abgases im Endrohr 1 der Abgasanlage 4 bezogen. Die Strömungsrichtung des Abgases ist in Figur 2 durch Pfeile gekennzeichnet. Zwischen dem Bereich der fluiden Anbindung zwischen Abgasanlage 4 und Schallerzeuger 3 und der Verbrennungskraftmaschine 6 können weitere Komponenten der Abgasanlage 4, wie beispielsweise ein Katalysator und ein Schalldämpfer, vorgesehen sein (nicht gezeigt). Der Lautsprecher 2 und das Fehlermikrofon 5 sind jeweils mit einer Regelung 9 verbunden. Weiter ist die Regelung 9 über einen CAN-Bus mit einer Motorsteuerung 6' eines Verbrennungsmotors 6 verbunden. Der Verbrennungsmotor 6 weist weiter eine Ansauganlage 6" auf. Anhand von durch das Fehlermikrofon 5 gemessenem Schall und von über den CAN-Bus empfangenen Betriebsparametern des Verbrennungsmotors 6 berechnet die Regelung 9 für den Lautsprecher 2 ein Signal, welches bei Überlagerung mit dem im Inneren des Endrohrs 1 der Abgasanlage 4 geführten Schall ein angestrebtes Gesamtgeräusch erzeugt, und gibt dieses an den Lautsprecher 2 aus. Dabei kann die Regelung beispielsweise einen Filtered-x Least mean squares (FxLMS) Algorithmus verwenden, und versuchen, ein mittels des Fehlermikrofons gemessenes Rückkoppelsignal/Fehlersignal durch Ausgabe von Schall über den Lautsprecher auf Null (im Falle der Schallauslöschung) oder einen vorgegebenen Schwellwert (im Falle der Schallbeeinflussung) zu regeln. Statt eines CAN-Bus kann auch ein anderes Bus-System verwendet werden.

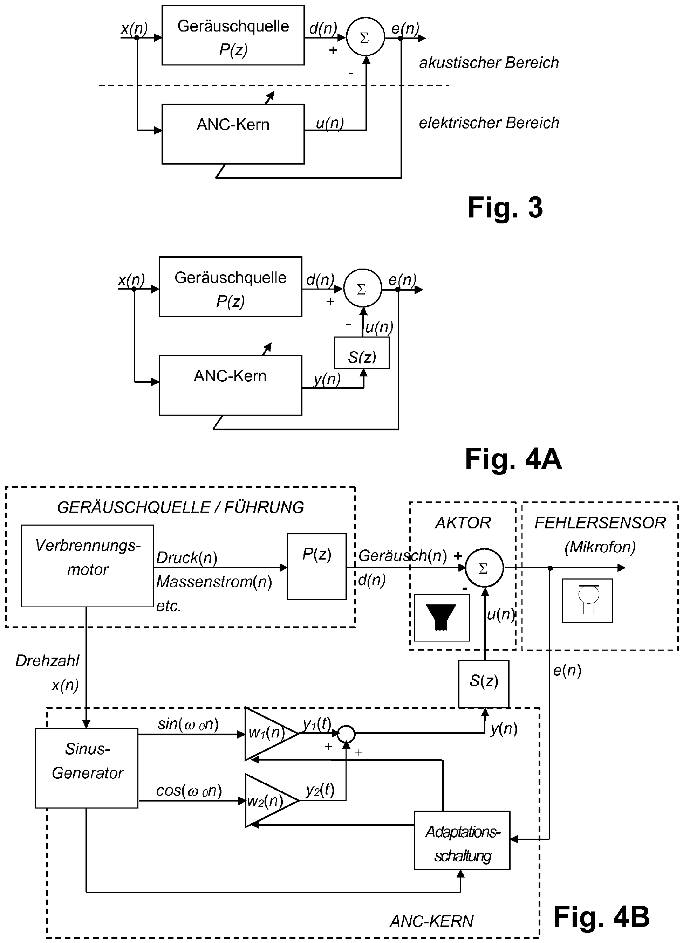

Die Arbeitsweise der Regelung wird nachfolgend unter Bezugnahme auf die Figuren 3 bis 5 am Beispiel einer Antischall-Regelung (ANC (active noise cancellation)-Regelung) näher erläutert.

Viele Geräusche, welche durch Maschinen wie beispielsweise Verbrennungsmotoren, Kompressoren oder Propeller hervorgerufen werden, weisen periodische Komponenten auf. Dies erlaubt es durch Überwachung der jeweiligen Maschine mit einem geeigneten Sensor (z.B. Drehzahlmesser), einen zeitabhängigen Eingangswellenvektor $x(n)$ bereit zu stellen, welcher eine Abhängigkeit von der Grundfrequenz und den Harmonischen des von der Maschine überwiegend erzeugten Geräuschs aufweist. In diese Abhängigkeit können beispielsweise Abgasgegendruck, Massenstrom des Abgases, Temperatur des Abgases etc. einfließen. Viele Maschinen erzeugen Geräusche von unterschiedlichen Grundfrequenzen; diese werden häufig als Motorordnungen bezeichnet.

Dieser zeitabhängige Eingangswellenvektor $x(n)$ hat, wie in Figur 3 dargestellt, einen Einfluss auf das von der Geräuschquelle gemäß einer unbekannten z-transformierten Übertragungsfunktion der Geräuschquelle $P(z)$ erzeugte Signal (entspricht dem erzeugten zu überlagernden Geräusch) $d(n)$ und wird von dem Steueralgorithmus eines Systems zur aktiven Beeinflussung von Schall (in den Figuren 3, 4A, 4B und 6A als "ANC-Kern" bezeichnet) zur Erzeugung eines einem zur Überlagerung verwendeten Signal $u(n)$ entsprechenden Schalls verwendet, welcher bei Überlagerung mit dem dem zu überlagernden Signal $d(n)$ entsprechenden Schall zu einem gewünschten, dem Rückkoppelsignal $e(n)$ entsprechenden Geräusch führt. Das zur Überlagerung verwendete Signal $u(n)$ entspricht (innerhalb des Betriebsbereichs) dem Schalldruck eines Schallerzeugers, welcher den zu überlagernden Schall erzeugt. Die Übertragungsfunktion der Geräuschquelle $P(z)$ kann empirisch bestimmt werden.

Die Überlagerung ist in Figur 3 durch das Summenzeichen $\sum$ symbolisiert und findet im akustischen Bereich (z.B. einer Abgasleitung) statt. Das sich aus der Überlagerung ergebende Rückkoppelsignal $e(n)$ wird beispielsweise mittels eines Fehlermikrofons erfasst und dem Steueralgorithmus (ANC-Kern) als Rückkoppelsignal zurückgeführt.

$$e(n) = d(n) - u(n)$$

Das Rückkoppelsignal $e(n)$ entspricht somit einem Schalldruck des überlagerten Geräuschs.

In Figur 3 ist $P(z)$ die Z-Transformierte der Übertragungsfunktion der Geräuschquelle. Diese Übertragungsfunktion $P(z)$ kann neben der Grundgröße der das Geräusch erzeugenden Maschine (im vorliegenden Fall ein die Drehzahl repräsentierender, zeitabhängiger Eingangswellenvektor $x(n)$) von zahlreichen physikalischen Parametern wie beispielweise Druck, Massendurchsatz und Temperatur des schallführenden Systems abhängen. In der Folge ist die Übertragungsfunktion der Geräuschquelle $P(z)$ in der Regel nicht genau bekannt und wird häufig empirisch bestimmt.

Es ist bekannt, dass das in Figur 3 gezeigte Modell der ANC-Regelung Unzulänglichkeiten aufweist, da das sich aus der Überlagerung des von der Geräuschquelle anhand der Übertragungsfunktion der Geräuschquelle $P(z)$ erzeugte zu überlagernde Signal $d(n)$ mit dem vom Schallerzeuger entsprechend dem zur Überlagerung verwendeten Signal $u(n)$ erzeugtem Schall ergebende Rückkoppelsignal $e(n),$ welches dem Steueralgorithmus zurückgeführt wird, Komponenten enthält, die nicht auf die Übertragungsfunktion $P(z)$ der Geräuschquelle zurückzuführen sind.

In der Folge wurde das Modell der ANC-Regelung um eine Übertragungsfunktion des Schallerzeugers S(z) erweitert, wie es in Figuren 4A, 4B gezeigt ist.

Diese Übertragungsfunktion des Schallerzeugers $S(z)$ berücksichtigt zum einen Unzulänglichkeiten der im elektrischen Bereich verwendeten Digital-Analog (D/A) Umsetzer, Filter, Verstärker, Schallerzeuger, etc. aber auch des im akustischen Bereichs von der Übertragungsfunktion der Geräuschquelle $P(z)$ noch nicht berücksichtigten Pfades vom Ort der Schallerzeugung/Schallüberlagerung zum Ort eines das Rückkoppelsignal $e(n)$ bestimmenden Fehlermikrofons und schließlich Unzulänglichkeiten des sich im elektrischen Bereich hieran anschließenden Fehlermikrofons, Vorverstärkers, Anti-Aliasing Filters und Analog-Digital (A/D) Umsetzers etc..

In Erweiterung des Modells aus Figur 3 berücksichtigt das in dem Modell von Figur 4A, 4B von dem ANC-Kern ausgegebene Signal $y(n)$ daher die Übertragungsfunktion des Schallerzeugers $S(z)$, welche die Umsetzung des vom ANC-Kern ausgegebenen Signals $y(n)$ in das Signal $u(n).$ Dabei entspricht das zur Überlagerung verwendete Signal $u(n)$ der (in mathematischer Weise idealisierten) Amplitude des vom Schallerzeuger erzeugten Signals.

Dabei berücksichtigt die Übertragungsfunktion des Schallerzeugers $S(z)$ den gesamten Bereich von dem Ausgang der Regelung bis zum Rückkoppelsignal der Regelung.

Wenn durch die Geräuschquelle Geräusche erzeugt werden (d. h. die Geräuschquelle eingeschaltet ist), ergibt sich die Übertragungsfunktion des Schallerzeugers $S(z)$ zu

$$S(z) = u(z) / y(z)$$

und entspricht das zur Überlagerung verwendete Signal $u(n)$ der Faltung (Konvolution) der Signale $s(n)$ und $y(n)$

$$u(n) = conv[s(n),y(n)],$$

wobei $s(n)$ die Impulsantwort der Übertragungsfunktion des Schallerzeugers $S(z)$ ist. $e(z), y(z)$ und $u(z)$ sind jeweils die Z-Transformierten der Signale e(n), y(n) und u(n).

Figur 4B zeigt das Modell aus Figur 4A in größerer Detailtreue. Ersichtlich wird das von dem ANC-Kern ausgegebene Signal y(n) aus zwei von einem Sinusgenerator bereitgestellten, relativ zueinander um 90° verschobenen Sinusschwingungen $sin(\omega_o n)$, $cos(\omega_o n)$ zusammengesetzt, welche mittels zweier Verstärker zuvor um unterschiedliche Verstärkungsfaktoren $w_1(n)$, $w_2(n)$ verstärkt worden sind, um zwei relativ zueinander um 90° verschobene Signale $y_1(n)$, $y_2(n)$ mit unterschiedlichen Amplituden zu erzeugen. Die Verstärkung der beiden Verstärker wird dabei von einer Adaptionsschaltung dynamisch in Abhängigkeit von dem Rückkoppelsignal e(n) entsprechend angepasst.

Soll beispielsweise für eine gewisse Drehzahl RPM des Verbrennungsmotors die i-te Motorordnung $EO_i$ ausgelöscht werden, ergibt sich die auszulöschende Grundfrequenz $f_0$ zu

$$f_0 = EO_i \cdot RPM/60.$$

$$\omega_0 = 2\pi f_0$$

Die in Figur 4B zur Anpassung der Verstärkung verwendete Adaptionsschaltung wird mit einer Taktfrequenz betrieben, welche die Taktfrequenz des ANC-Kerns festlegt.

In Figur 5 ist schematisch der Spektralverlauf der Amplitude (*Magn*) des Geräuschs (*Geräusch(n)*) über die Frequenz (*Freq*) gezeigt. Dabei gibt das zu überlagernde Signal d(n) den aktuellen Schalldruck bei der gegebenen Grundfrequenz $f_0$ in Pascal an. $\|d(f)\|$ gibt dabei für Harmonische den Betrag der Amplitude zu einem bestimmten Zeitpunkt an.

Der Eingangswellenvektor **x**(n) der ANC-Regelung wird dabei so definiert (Vektoren sind **fett** gedruckt):

$$\mathbf{x}(n) = [sin(\omega_0\, n),\, cos(\omega_0\, n)]$$

In dem Aufsatz "Active Noise Control: A tutorial review" von Sen M. Kuo und Dennis R. Morgan, erschienen in den Proceedings of the IEEE, Vol. 87, No. 6, Juni 1999 wurde nachgewiesen, dass die ANC-Regelung nach einer Einschwingzeit das Rückkoppelsignal e(n) minimiert. Auf den Inhalt dieses Aufsatzes wird vollumfänglich und insbesondere im Hinblick auf die dort beschriebene Narrowband-Feedforward-Regelung Bezug genommen.

$$y(n) = \mathbf{x}(n)\, \mathbf{w}^T(n) = \mathbf{w}(n)\, \mathbf{x}^T(n) = w_1(n)\, sin(\omega_0\, n) + w_2(n)\, cos(\omega_0\, n)$$

Dabei bezeichnet $\mathbf{x}^T(n)$ die Transponierte des Eingangswellenvektors **x**(n), also den Vektor, bei dem Spalten und Zeilen vertauscht sind.

Dabei wird der aus den Verstärkungsfaktoren gebildete Vektor $\mathbf{w}(n) = [w_1(n), w_2(n)]$ als Phasor-Vektor der ANC-Regelung bezeichnet.

Wie in Figur 4B gezeigt, wird die Verstärkung der Sinuswellen mittels des Phasor-Vektors **w**(n) jeweils durch eine Adaption angepasst.

$$\mathbf{w}(n+1) = \mathbf{w}(n) + \mu \cdot conv[s(n),\, \mathbf{x}(n)]\, e(n)$$

wobei $\mu$ die Anpassungsgeschwindigkeit angibt.

Da die Übertragungsfunktion des Schallerzeugers S(z) dem ANC-Kern nicht für jeden Zeitpunkt bekannt ist, wird stattdessen eine Abschätzung Ŝ(z) verwendet, so dass die Anpassung zu

$$\mathbf{w}(n+1) = \mathbf{w}(n) + \mu \cdot conv[\hat{s}(n),\, \mathbf{x}(n)]\, e(n)$$

wird, wobei $\hat{s}(n)$ die Impulsantwort von $\hat{S}(z)$ ist.

Es wurde im Stand der Technik nachgewiesen, dass es unter den Annahmen, dass

a) das zu überlagernde Signal d(n) eine einfache Welle ist; und
b) der verwendete Aktor eine Amplitude $\|u(n)\| \geq \|d(n)\|$ bereitstellen kann möglich ist, den Mittelwert (*AVG*) von dem Rückkoppelsignal e(n) deutlich zu reduzieren:

$$AVG[e(n)_{FINAL}] \sim 0$$

Es wird betont, dass die vorstehenden Ausführungen nur beispielshaft sind, und die vorliegende Erfindung auch andere bekannte Möglichkeiten zur Erzeugung des vom ANC-Kern ausgegebenen Signals *y(n)* einschließt.

Bei bekannten Systemen zur aktiven Schallbeeinflussung ist es nachteilig, dass in der Regel versucht wird, ein von der Geräuschquelle erzeugtes Geräusch weitgehend oder vollständig auszulöschen. Hieraus ergibt sich eine weitgehende Auslastung eines verwendeten Aktors, der damit nur sehr eingeschränkt für eine weitere Schallbeeinflussung (im Sinne eines Schalldesigns) zur Verfügung steht.

Es ist daher Aufgabe der vorliegenden Erfindung, ein System und ein Verfahren zur aktiven Schallbeeinflussung bereitzustellen, welches einen größeren Freiheitsgrad bei der Schallbeeinflussung bereitstellt und bevorzugt Reserven eines verwendeten Aktors freisetzt.

Ausführungsformen eines Systems zur aktiven Schallbeeinflussung weisen einen Schallerzeuger, einen Fehlersensor (z.B. Fehlermikrofon), einen Signalerzeuger (ANC-Kern), einen Regler, einen ersten Gewichter, einen Addierer und einen zweiten Gewichter auf. Dabei ist der Schallerzeuger dazu ausgebildet, bei Beaufschlagung mit einem Audiosignal Schall zu erzeugen und den erzeugten Schall mit einem zu manipulierenden Schall zu überlagern. Bei dem zu manipulierenden Schall kann es sich gemäß einer Ausführungsform um in einer Abgasanlage oder Ansauganlage eines verbrennungsmotorisch betriebenen Fahrzeugs geführten von einem Verbrennungsmotor erzeugten Schall handeln. Der Fehlersensor (bei welchem es sich beispielsweise auch um einen Drucksensor handeln kann) ist dazu ausgebildet, überlagerten Schall, der sich aus der Überlagerung des von dem Schallerzeuger erzeugten Schalls mit dem zu manipulierendem Schall ergibt, zu messen und ein entsprechendes Rückkoppelsignal auszugeben. Das Schallsignal, auf welchem das vom Schallerzeuger verwendete Audiosignal beruht, wird durch den Signalerzeuger erzeugt und ausgegeben. Der Regler (bei welchem es sich um ein zum Signalerzeuger separates Bauteil handeln kann, oder welcher in den Signalerzeuger integriert sein kann) ist ausgebildet, ein Regelsignal zu erzeugen. Dabei repräsentiert (oder ist) das Regelsignal einen Wert einer Folge von rationalen Zahlen. Der Begriff "Folge von Zahlen" soll dabei zum Ausdruck bringen, dass das Regelsignal keine Konstante ist, sondern von dem Regler im Zeitverlauf immer neue Werte für das Regelsignal ausgegeben werden. Das Regelsignal ist somit dynamisch. Der Bereich der rationalen Zahlen größer Null umfasst den Bereich kleiner Null, den Wert Null, den Bereich größer Null bis Eins und den Bereich größer als Eins. Das Regelsignal kann ein Wert aus allein vorstehenden Bereichen sein. Das von dem Signalerzeuger ausgegebene Schallsignal wird von dem ersten Gewichter z-Transformiert, mit einer Abschätzung der z-Transformierten der Übertragungsfunktion des Schallerzeugers ($\hat{S}(z)$) konvoliert (d.h. gefaltet) und mit dem vom Regler ausgegebene Regelsignal multipliziert. Das sich ergebende Signal wird vom dem ersten Gewichter mit "-1" multipliziert und so invertiert. Das auf diese Weise transformierte, gefaltete, gewichtete und invertierte Schallsignal wird an den Addierer ausgegeben. Der Addierer erhält zudem das von dem Fehlersensor erzeugte Rückkoppelsignal. Das gewichtete und invertierte Schallsignal wird von dem Addierer zu dem Rückkoppelsignal addiert, und das so erhaltene modifizierte Rückkoppelsignal wird an den Signalerzeuger ausgegeben. Der Signalerzeuger verwendet das modifizierte Rückkoppelsignal, um das Schallsignal zu erzeugen. Somit hängt das Schallsignal (unter anderem) von dem modifizierten Rückkoppelsignal ab. Der zweite Gewichter multipliziert das von dem Signalerzeuger ausgegebene Schallsignal mit der Differenz aus Eins und dem von dem Regler erzeugten Regelsignal und gibt das so gewichtete Schallsignal zur Erzeugung des Audiosignals für den Schallerzeuger aus. Der Regler erzeugt das Regelsignal in Abhängigkeit von einem Eingangswellenvektor, welcher von einem Zustand der Quelle des zu manipulierenden Schalls abhängt. Die Verwendung des Regelsignals hat somit zur Folge, dass einerseits an den Schallerzeuger ein gewichtetes Schallsignal ausgegeben wird, welches gezielt nicht zu einer vollständigen Auslöschung des zu manipulierenden Schalls führt, und andererseits auch das Rückkoppelsignal der Gewichtung des Schallsignals entsprechend modifiziert wird, so dass der Signalerzeuger (ANC-Kern) das Schallsignal unter Berücksichtigung des modifizierten Rückkoppelsignals erzeugt. Da das Regelsignal auch einen Wert größer als Eins annehmen kann, kann es sogar zu einer Verstärkung des zu manipulierenden Schalls kommen. Dabei ist das Regelsignal im Zeitverlauf allerdings nicht konstant, sondern eine Folge von Zahlen. Auf diese Weise ist es möglich, in Abhängigkeit von dem zu manipulierenden Schall oder in Abhängigkeit von unterschiedlichen Betriebszuständen unterschiedliche Regelsignale zu verwenden. Diese Regelsignale erlauben eine Absenkung oder Anhebung des zu manipulierenden Schalls um einen Faktor, der vom Regelsignal abhängt. Beispielsweise kann bei einem niedrigen Schalldruck des zu manipulierenden Schalls eine Anhebung um einen gewissen Faktor gewünscht sein, und bei einem hohen Schalldruck des zu manipulierenden Schalls eine Absenkung um einen gewissen Wert. Es sei betont, dass das Schallsignal, welches vom Signalerzeuger erzeugt wird, ebenfalls nicht konstant ist, sondern insbesondere vom modifizierten Rückkoppelsignal und damit indirekt auch vom zu manipulierenden Schall abhängt. Das Maß der Anhebung oder Absenkung des zu manipulierenden Schalls hängt jedoch wesentlich vom Regelsignal ab.

Gemäß einer Ausführungsform erzeugt der Regler das Regelsignal in Abhängigkeit von einem Eingangswellenvektor, welcher von einem Zustand einer Quelle des zu manipulierenden Schalls abhängt und damit mit dem zu manipulierenden Schall direkt oder indirekt in Beziehung steht. Somit kann das Regelsignal eine Funktion des Eingangswellenvektors sein.

Gemäß einer Ausführungsform aktualisiert der Regler das Regelsignal in festen Zeitabständen und damit zyklisch.

Gemäß einer Ausführungsform ist der Eingangswellenvektor repräsentativ für wenigstens eines von Drehzahl oder Motorlast eines Motors, der die Geräuschquelle darstellt, eine Gaspedalstellung oder einen Gaspedalgradienten (Veränderung der Gaspedalstellung pro Zeiteinheit), wobei das Gaspedal die Geräuschquelle steuert, einen Zustand einer Kupplung oder eines Getriebes, welche mit der Geräuschquelle verbunden sind, einem Betriebsmodus der Geräuschquelle (z.B. im Falle eines Verbrennungsmotors eines Fahrzeugs "sportlich" oder "sparsam"), eine Spannung einer mit der Geräuschquelle verbundenen Batterie und einen Betriebszustand der Geräuschquelle (z.B. Start der Geräuschquelle wird vorbereitet (im Falle eines Verbrennungsmotors: Zündung ist eingeschaltet), Geräuschquelle wird gestartet, Geräuschquelle läuft).

Das System kann gemäß einer Ausführungsform weiter ein Mikrofon aufweisen, welches den zu manipulierenden Schall misst und ein diesem entsprechendes Messsignal ausgibt. Beispielsweise kann es sich bei dem zu manipulierenden Schall um einen in einer Abgasanlage eines verbrennungsmotorisch betriebenen Fahrzeugs geführten Schall handeln; dann kann das Mikrofon an oder in der Abgasanlage an einer Stelle angeordnet sein, die - bezogen auf eine Strömungsrichtung des in der Abgasanlage geführten Abgases - stromaufwärts der Stelle liegt, an welcher in der Abgasanlage geführter Schall mit durch den Schallerzeuger erzeugtem Schall überlagert wird. Der Regler ist dann ausgebildet, das Regelsignal in Abhängigkeit von dem Messsignal zu erzeugen, welches durch das Mikrofon ausgegeben wird. Der Eingangswellenvektor des Reglers ist dann das Messsignal des Mikrofons. Somit kann die Abhängigkeit des Eingangswellenvektors von dem zu manipulierenden Schall darin bestehen, dass der Eingangswellenvektor durch Messen des zu manipulierenden Schalls gewonnen wird.

Gemäß einer Ausführungsform wird das Regelsignal nicht anhand eines aktuellen Eingangswellenvektors berechnet, sondern anhand eines zeitlich zurückliegenden Eingangswellenvektors. Der zeitliche Abstand hängt von der internen Taktfrequenz des Signalerzeugers ab und ist bevorzugt so klein wie möglich gewählt, um einen Fehler möglichst klein zu halten. Gemäß einer Ausführungsform beträgt der zeitliche Abstand das Einfache der Taktfrequenz oder das 2 bis 50-fache der Taktfrequenz. Gemäß einer Ausführungsform liegt der zeitlich zurückliegende Eingangswellenvektor weniger als eine Sekunde und weiter bevorzugt weniger als eine halbe Sekunde und weiter bevorzugt weniger als eine viertel Sekunde zurück.

Wenn für die Erzeugung des Regelsignals durch den Regler nicht exakt der gleiche Eingangswellenvektor verwendet wird, wie für die Erzeugung des Schallsignals durch den Signalerzeuger, sondern ein zeitlich geringfügig zurückliegender Eingangswellenvektor, wird das System robuster und weniger anfällig gegen ein Überschwingen.

Alternativ oder zusätzlich kann das System gemäß einer Ausführungsform weiter eine Benutzerschnittstelle aufweisen, welche ausgebildet ist, eine Benutzereingabe zu empfangen. Der Regler ist dann ausgebildet, das Regelsignal in Abhängigkeit von der Benutzereingabe zu erzeugen, welche über die Benutzerschnittstelle empfangen wird. In diesem Fall wird die Abhängigkeit des Eingangswellenvektors von dem zu manipulierenden Schall somit indirekt durch eine entsprechende Benutzereingabe hergestellt. Beispielsweise kann es sich bei der Benutzerschnittstelle um eine Tastatur oder auch um ein Gaspedal, dessen Stellung oder Gradient (Veränderung pro Zeiteinheit) erfasst wird, handeln.

Alternativ oder zusätzlich ist der Regler mit einer Motorsteuerung eines Motors verbindbar und ausgebildet, das Regelsignal in Abhängigkeit von Signalen zu erzeugen, welche von der Motorsteuerung empfangen werden. In diesem Fall wird die Abhängigkeit des Eingangswellenvektors von dem zu manipulierenden Schall über von der Motorsteuerung ausgegebene Signale hergestellt.

Alternativ oder zusätzlich ist der Regler ausgebildet, das Regelsignal in Abhängigkeit von Drehzahlgebersignalen eines Motors zu erzeugen

Gemäß einer Ausführungsform ist der Signalerzeuger weiter ausgebildet, einen Eingangswellenvektor zu erhalten, welcher von dem zu manipulierenden Schall abhängt (und damit mit dem zu manipulierenden Schall direkt oder indirekt in Beziehung steht), und das Schallsignal in Abhängigkeit von dem Eingangswellenvektor zu erzeugen.

Dann kann das System gemäß einer Ausführungsform weiter ein Mikrofon aufweisen, welches den zu manipulierenden Schall misst und ein diesem entsprechendes Messsignal ausgibt. Beispielsweise kann es sich bei dem zu manipulierenden Schall um einen in einer Abgasanlage eines verbrennungsmotorisch betriebenen Fahrzeugs geführten Schall handeln; dann kann das Mikrofon an oder in der Abgasanlage an einer Stelle angeordnet sein, die - bezogen auf eine Strömungsrichtung des in der Abgasanlage geführten Abgases - stromaufwärts der Stelle liegt, an welcher in der Abgasanlage geführter Schall mit durch den Schallerzeuger erzeugtem Schall überlagert wird. Der Signalerzeuger ist dann ausgebildet, das Schallsignal in Abhängigkeit von dem Messsignal zu erzeugen, welches von dem Mikrofon ausgegeben wird. Alternativ oder zusätzlich kann der Signalerzeuger mit einer Motorsteuerung und/oder einem Drehzahlgeber eines Motors verbindbar und ausgebildet sein, das Schallsignal in Abhängigkeit von Signalen zu erzeugen, welche von der Motorsteuerung und/oder Drehzahlgeber empfangen werden.

Gemäß einer Ausführungsform wird das Schallsignal von dem Signalerzeuger nicht anhand eines aktuellen (Mess-)Signals berechnet, sondern anhand eines zeitlich zurückliegenden (Mess-)Signals. Der zeitliche Abstand hängt von der Taktfrequenz des Signalerzeugers ab und ist bevorzugt so klein wie möglich gewählt, um einen Fehler möglichst klein zu halten. Gemäß einer Ausführungsform beträgt der zeitliche Abstand das Einfache der Taktfrequenz oder das 2 bis 50-fache der Taktfrequenz des Signalerzeugers. Bevorzugt liegt das zeitlich zurückliegende Messsignal weniger als eine Sekunde und weiter bevorzugt weniger als eine halbe Sekunde und weiter bevorzugt weniger als eine viertel Sekunde zurück.

Gemäß einer Ausführungsform handelt es sich bei dem Schallerzeuger um einen Lausprecher, der in einem geeigneten Gehäuse angeordnet ist, und optional einen Schallleiter aufweisen kann. Gemäß einer Ausführungsform ist der Schallerzeuger über ein T-Stück oder ein Y-Stück an die Abgasanlage eines verbrennungsmotorisch betriebenen Fahrzeugs angebunden.

Gemäß einer Ausführungsform ist der Fehlersensor an oder in einer Abgasanlage eines verbrennungsmotorisch betriebenen Fahrzeugs an einer Stelle angeordnet, welche bezogen auf die Strömungsrichtung des Abgases in der Abgasanlage stromabwärts der Stelle liegt, an welcher in der Abgasanlage geführter Schall mit durch den Schallerzeuger erzeugtem Schall überlagert wird.

Gemäß einer Ausführungsform errechnet der Regler das Regelsignal anhand einer mathematischen Formel aus dem Eingangswellenvektor. Gemäß einer alternativen Ausführungsform ist in dem Regler eine Tabelle gespeichert, in welcher für verschiedene Eingangswellenvektoren oder Eingangswellenvektorbereiche geeignete Regelsignale gespeichert sind. Dann ist der Regler ausgebildet, ein einem jeweiligen Eingangswellenvektor zugehöriges Regelsignal aus der Tabelle auszulesen und auszugeben. Die den Eingangswellenvektoren zugehörigen Regelsignale können beispielsweise empirisch bestimmt sein. Eine derartige Tabelle wird auch als "Bedatung" bezeichnet.

Gemäß einer Ausführungsform weist der Signalerzeuger einen Sinus-Generator, der ein erstes Signal erzeugt, dessen zeitlicher Verlauf der Sinusfunktion folgt, und der ein zweites Signal erzeugt, welches gegenüber dem ersten Signal um 90° verschoben ist, einen ersten Verstärker zur Verstärkung des ersten Signals, einen zweiten Verstärker zur Verstärkung des zweiten Signals und einen Überlagerer, in welchem die von dem ersten und zweiten Verstärker verstärkten ersten und zweiten Signale überlagert werden, auf und ist ausgebildet, das vom Überlagerer überlagerte Signal als Schallsignal auszugeben. Weiter weist der Signalerzeuger eine Adaptionsschaltung auf, welche die Verstärkung des ersten und zweiten Verstärkers in Abhängigkeit vom modifizierten Rückkoppelsignal regelt. Gemäß einer Ausführungsform ist die Adaptionsschaltung ausgebildet, im Falle einer Verwendung des Systems in einem verbrennungsmotorisch betriebenen Fahrzeug mit einer Motorsteuerung einer Verbrennungskraftmaschine und/oder dem Fehlersensor verbunden zu werden, und die Verstärkung des ersten und zweiten Verstärkers auch in Abhängigkeit von Eingangswellenvektoren zu wählen, die von der Motorsteuerung empfangen werden. Bei diesen Eingangswellenvektoren kann es sich gemäß einer Ausführungsform im Falle eines verbrennungsmotorisch betriebenen Fahrzeugs um eines oder mehrere von Geschwindigkeit des Fahrzeugs, Drehzahl des Verbrennungsmotors, Drehmoment des Verbrennungsmotors, Temperatur von in einer Abgasanlage geführtem Abgas und Massenstrom des in der Abgasanlage geführten Abgases oder in einer Ansauganlage angesaugten Luft handeln.

Gemäß einer Ausführungsform kann dann der Sinus-Generator im Falle einer Verwendung des Systems in einem verbrennungsmotorisch betriebenen Fahrzeug ausgebildet sein, mit einer Motorsteuerung einer Verbrennungskraftmaschine verbunden zu werden und die Frequenz des ersten und zweiten Signales in Abhängigkeit von Eingangswellenvektoren zu wählen, die von der Motorsteuerung empfangen werden. Bei diesen Eingangswellenvektoren kann es sich gemäß einer Ausführungsform um eines oder mehrere von Geschwindigkeit des Fahrzeugs, Drehzahl des Verbrennungsmotors, Drehmoment des Verbrennungsmotors, Temperatur von in einer Abgasanlage geführtem Abgas und Massenstrom des in der Abgasanlage geführten Abgases oder in einer Ansauganlage angesaugten Luft handeln.

Gemäß einer Ausführungsform kann der Sinus-Generator mit der Adaptionsschaltung verbunden und ausgebildet sein, die Frequenz des ersten und zweiten Signales in Abhängigkeit von Signalen zu wählen, die von der Adaptionsschaltung empfangen werden. Hierdurch kann vermieden werden, dass sich der anhand des Schallsignals erzeugte Schall und der zu manipulierende Schall zwar entsprechen, relativ zueinander aber eine Phasenverschiebung ungleich 180° aufweisen.

Gemäß einer Ausführungsform verwendet der Signalerzeuger zur Erzeugung des Schallsignals unter Berücksichtigung des Rückkoppelsignals eine Narrowband-Feedforward-Regelung.

Gemäß einer Ausführungsform ist der erste Gewichter ausgebildet, anstelle des von dem Signalerzeuger zu einem aktuellen Zeitpunkt ausgegebenen Schallsignals ein von dem Signalerzeuger zu einem früheren Zeitpunkt ausgegebenes Schallsignal zu verwenden. Dabei können gemäß einer Ausführungsform die früheren Zeitpunkte des von dem Signalerzeuger ausgegebenen Signals gegenüber dem von dem Signalerzeuger zu einem aktuellen Zeitpunkt ausgegebenen Schallsignal um ein Einfaches oder Mehrfaches einer internen Taktfrequenz des Signalerzeugers (91) zurückliegen.

Ausführungsformen eines Kraftfahrzeugs weisen eine Verbrennungskraftmaschine mit einer Motorsteuerung und/oder einem Drehzahlgeber und die vorstehend beschriebene Steuerung auf. Die Motorsteuerung und/oder der Drehzahlgeber ist dann mit wenigstens einem von dem Signalerzeuger und dem Regler verbunden und ausgebildet, eine Drehzahl und/oder eine Motorlast und/oder ein Drehmoment der Verbrennungskraftmaschine zu ermitteln und als Eingangswellenvektor an den Signalerzeuger und/oder den Regler auszugeben.

Ausführungsformen eines Verfahrens zur aktiven Schallbeeinflussung weisen die folgenden Schritte auf:

Erzeugen eines Schallsignals;

Messen eines überlagerten Schalls, der sich aus der Überlagerung von (beispielsweise mittels eines Schallerzeugers) in Abhängigkeit vom Schallsignal erzeugtem Schall mit zu manipulierendem Schall (beispielsweise in einer Abgasanlage eines verbrennungsmotorisch betriebenen Fahrzeugs geführtem Schall) ergibt, um ein entsprechendes Rückkoppelsignal zu erhalten;

Erzeugen eines Regelsignals, wobei das Regelsignal einen Wert einer Folge von rationalen Zahlen repräsentiert;

z-Transformieren des Schallsignals, Falten des transformierten Signals mit einer Abschätzung der z-Transformierten der Übertragungsfunktion des Schallerzeugers ($\hat{S}(z)$) und Gewichten des erhaltenen Signals mit dem Regelsignal und Invertieren des so erhaltenen gewichteten Signals;

Addieren des so gewichteten und invertierten Signals zu dem Rückkoppelsignal, um ein modifiziertes Rückkoppelsignal zu erhalten, wobei im Schritt des Erzeugens des Schallsignals das Schallsignal unter Verwendung des modifizierten Rückkoppelsignals erzeugt wird;

Gewichten des Schallsignals mit der Differenz aus Eins und dem Regelsignal, um ein gewichtetes Schallsignal zu erhalten; und

Verwendung des gewichteten Schallsignals zur Erzeugung des in Abhängigkeit vom Schallsignal erzeugten Schalls.

Gemäß einer Ausführungsform kann dann das Regelsignal in dem Schritt des Erzeugens des Regelsignals unter Verwendung eines Eingangswellenvektors erzeugt werden, welcher direkt oder indirekt von dem zu manipulierenden Schall abhängt.

Gemäß einer Ausführungsform umfasst das Verfahren weiter ein Messen des zu manipulierenden Schalls, um ein diesem entsprechendes Messsignal zu erhalten, wobei in dem Schritt des Erzeugens des Regelsignals das Regelsignal unter Verwendung des Messsignals erzeugt wird.

Gemäß einer Ausführungsform umfasst das Verfahren weiter ein Empfangen einer Benutzereingabe, wobei in dem Schritt des Erzeugens des Regelsignals das Regelsignal in Abhängigkeit von der Benutzereingabe erzeugt wird.

Gemäß einer Ausführungsform hängt das von wenigstens einem von einer Drehzahl oder Motorlast des Motors, einer Gaspedalstellung oder einem Gaspedalgradienten, einem Zustand einer Kupplung oder eines Getriebes, einem Betriebsmodus des Motors, einer Spannung einer Batterie und einem Betriebszustand des Verbrennungsmotors ab. Gemäß einer Ausführungsform wird im Schritt des Faltens der z-Transformierten des Schallsignals mit einer Abschätzung der z-Transformierten der Übertragungsfunktion des Schallerzeugers und Gewichten des erhaltenen Signals mit dem Regelsignal und Invertieren des so erhaltenen gewichteten Signals anstelle eines einem aktuellen Zeitpunkt entsprechenden Schallsignals ein einem früheren Zeitpunkt entsprechendes Schallsignal verwendet.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z.B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung eines Ausführungsbeispiels der Erfindung wird auf die beiliegenden Figuren Bezug genommen, von denen

Figur 1          perspektivisch ein System zur aktiven Beeinflussung von in der Abgasanlage geführtem Schall nach dem Stand der Technik zeigt;

Figur 2          schematisch ein Blockdiagramm des Systems zur aktiven Beeinflussung von in der Abgasanlage geführtem Schall nach Figur 1 zeigt;

Figur 3          schematisch einen Signalflussplan eines Systems zur aktiven Beeinflussung von Schall nach dem Stand der Technik zeigt;

Figuren 4A, 4B    schematisch unterschiedlich detaillierte Signalflusspläne eines Systems zur aktiven Beeinflussung von Schall nach dem Stand der Technik zeigen;

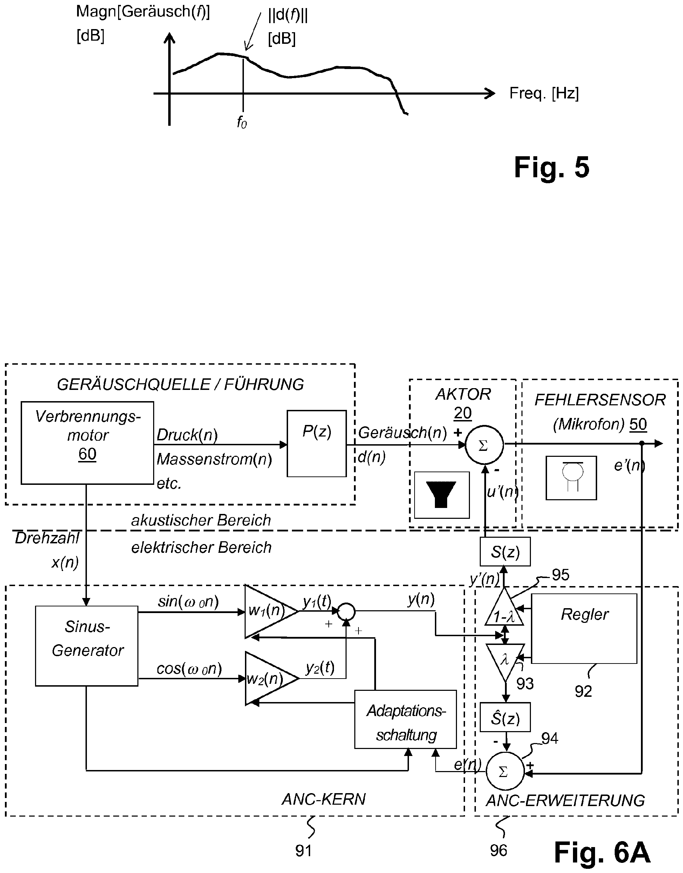

Figur 5    schematisch den Amplitudenverlauf eines zu manipulierenden Geräuschs zeigt;

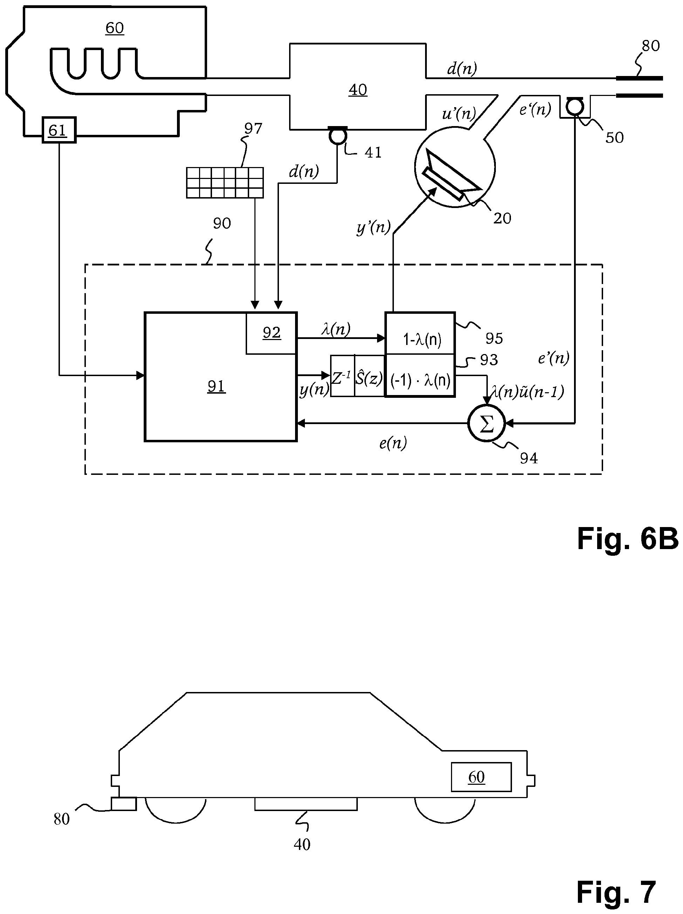

Figuren 6A, 6B    schematisch unterschiedlich detaillierte Signalflusspläne eines Systems zur aktiven Beeinflussung von Schall gemäß einer Ausführungsform der Erfindung zeigen;

Figur 7    schematisch ein verbrennungsmotorisch betriebenes Fahrzeug mit dem System aus Figuren 6A, 6B zeigt;

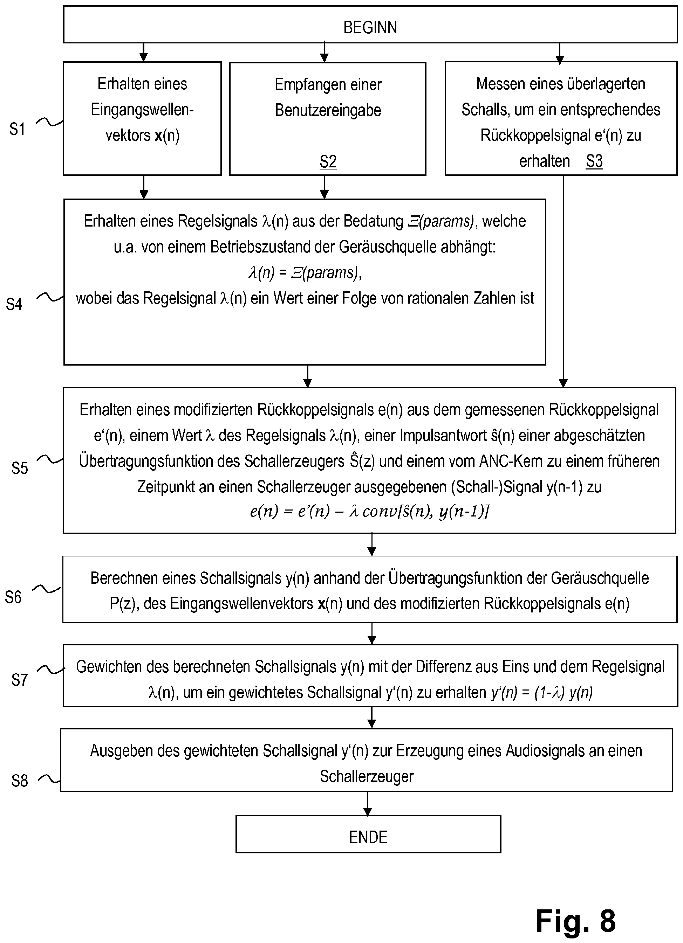

Figur 8    ein Flussdiagramm eines Verfahrens zur aktiven Beeinflussung von in der Abgasanlage geführtem Schall gemäß der Erfindung zeigt;

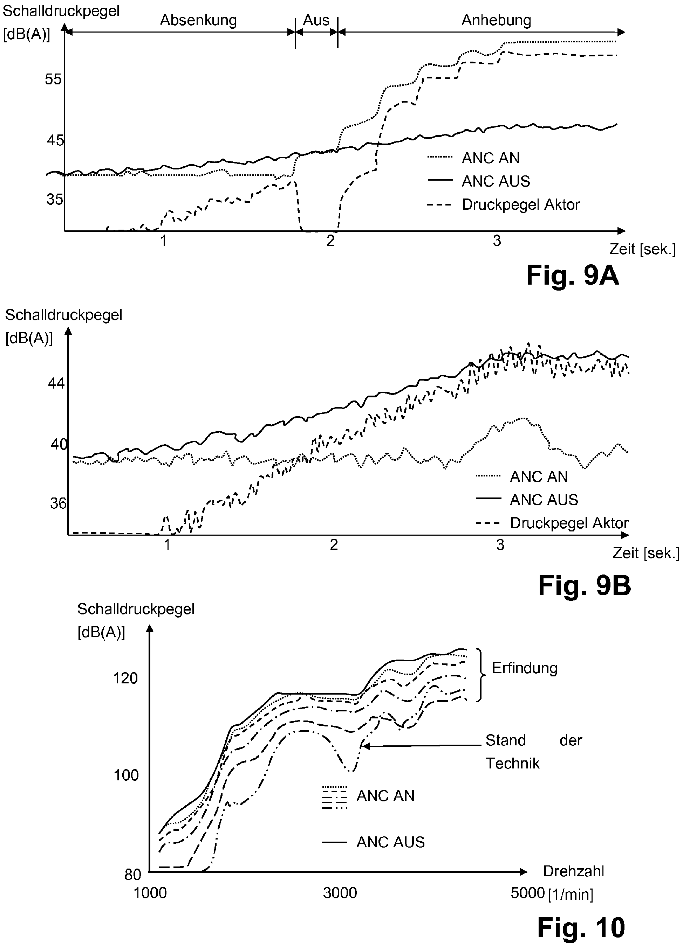

Figur 9A    schematisch den Zeitverlauf eines Schalldruckpegels bei Verwendung des Systems aus Figuren 6A, 6B zeigt;

Figur 9B    schematisch den Zeitverlauf eines Schalldruckpegels ohne Verwendung des Systems aus Figuren 6A, 6B und damit nach dem Stand der Technik zeigt;

Figur 10    schematisch den Zeitverlauf eines Schalldruckpegels bei Verwendung des Systems aus Figuren 6A, 6B zeigt, wobei zu Vergleichszwecken auch ein Zeitverlauf nach dem Stand der Technik eingeblendet ist; und

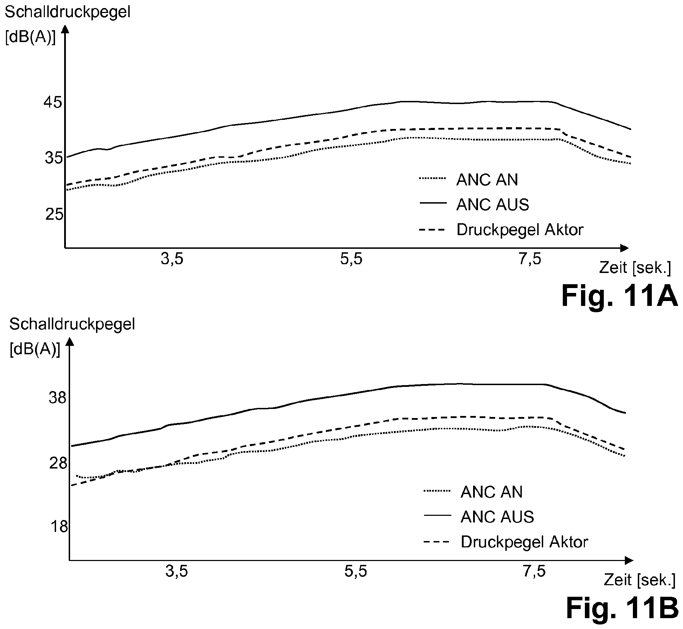

Figuren 11A, 11B    schematisch den Zeitverlauf eines Schalldruckpegels bei Verwendung des Systems aus Figuren 6A, 6B zeigt, wenn zusätzlich passive Maßnahmen zur Schallbeeinflussung ergriffen werden.

Im Folgenden wird unter Bezugnahme auf die Figuren eine bevorzugte Ausführungsform der Erfindung erläutert.

Ein in Figur 7 schematisch gezeigtes Kraftfahrzeug weist einen Verbrennungsmotor 60 und eine Abgasanlage 40 auf, über welche im Verbrennungsmotor 60 im Betrieb erzeugte Abgase und Schall zu einem Endrohr 80 geführt werden. In der Abgasanlage 40 werden die Abgase gereinigt und wird der Schall gedämpft, bevor die Abgase und der Schall über das Endrohr 80 an die Umgebung abgegeben werden.

In Figur 6A und 6B, welche schematisch unterschiedlich detaillierte Signalflusspläne eines Systems zur aktiven Beeinflussung von Schall gemäß einer Ausführungsform der Erfindung zeigen, entsprechen die von der Verbrennungskraftmaschine 60 erzeugten und in der Abgasanlage 40 geführten Geräusche einem zu überlagernden Signal $d(n)$. Dabei soll die Abhängigkeit von $n$ zum Ausdruck bringen, dass die von der Verbrennungskraftmaschine 60 erzeugten Geräusche vom Betriebszustand der Verbrennungskraftmaschine 60 (wie beispielsweise der Drehzahl und/oder dem Drehmoment der Verbrennungskraftmaschine 60) abhängen und sich damit im Zeitverlauf ändern. Da sich die Signalflusspläne der Figuren 6A und 6B sehr ähnlich sind, werden sie im Folgenden gemeinsam besprochen und nur auf Unterschiede eigens eingegangen.

Die in der Abgasanlage 40 geführten Geräusche werden von einem in der Abgasanlage 40 angeordneten Mikrofon 41 empfangen. Das Mikrofon 41 gibt ein entsprechendes Messsignal aus, welches dem zu überlagernden Signal $d(n)$ entspricht.

Bezogen auf die Strömungsrichtung des Abgases in der Abgasanlage 40 ist stromabwärts des Mikrofons 41 über eine Y-Leitung ein Schallerzeuger 20 (Aktor) mit einem Lautsprecher an die Abgasanlage 40 gekoppelt. Der Lautsprecher wird mit einem gewichteten Schallsignal $y'(n)$ beaufschlagt und erzeugt (unter Berücksichtigung der Übertragungsfunktion des Schallerzeugers $S(z)$ und zugehöriger Komponenten) einen Schall, der einem gewichteten zur Überlagerung verwendeten Signal $u'(n)$ entspricht, der die in der Abgasanlage 40 geführten Geräusche überlagert.

Weisen die zu überlagernden Signale $d(n)$, welche den in der Abgasanlage 40 geführten Geräuschen entsprechen, eine Phasenverschiebung von 90° gegenüber dem gewichteten zur Überlagerung verwendeten Signal $u'(n)$ des vom Lautsprecher erzeugten Schalls auf, und entsprechen sich die Signale $d(n)$ und $u'(n)$ auch in der Amplitude (d.h. $d(n) = - u'(n)$), so kommt es zu einer vollständigen Auslöschung der in der Abgasanlage 40 geführten Geräusche.

Über einen als Fehlermikrofon ausgebildeten Fehlersensor 50, welcher bezogen auf die Strömungsrichtung des Abgases in der Abgasanlage 40 stromabwärts der Stelle der Überlagerung der in der Abgasanlage 40 geführten Geräusche mit dem vom Lautsprecher erzeugten Schall angeordnet ist, wird der über das Endrohr 80 ausgegebene Schall vermessen und ein entsprechendes unmodifiziertes Rückkoppelsignal $e'(n)$ ausgegeben.

Das gewichtete Schallsignal $y'(n)$, mit welchem der Lautsprecher betrieben wird, wird von einem Antischall-System 90 bereitgestellt, welches einen Signalerzeuger/ANC-Kern 91 und eine ANC-Erweiterung 96 umfasst.

Der Signalerzeuger/ANC-Kern 91 weist einen Sinusgenerator, erste und zweite Verstärker und eine Adaptionsschaltung auf. Auf die Ausführungen zu Figur 4B wird verwiesen.

Die ANC-Erweiterung 96 weist einen Regler 92, erste und zweite Gewichter (welche durch Verstärker mit einstellbarer Verstärkung ausgebildet sind) 93, 95 und einen Addierer 94 auf.

In der in Figur 6B gezeigten Ausführungsform werden der Signalerzeuger/ANC-Kern 91 mit dem Regler 92 durch einen ersten Mikroprozessor realisiert, der erste und zweite Gewichter 93, 95 durch einen zweiten Mikroprozessor und der Addierer 94 durch einen dritten Mikroprozessor. Diese Komponenten können alternativ auch in einem einzigen Mikroprozessor integriert sein. Weiter alternativ kann auch der Regler 92 durch einen eigenen Mikroprozessor realisiert werden, wie es in Figur 6A gezeigt ist.

Der Signalerzeuger/ANC-Kern 91 und der Regler 92 sind mit einer Motorsteuerung 61 des Verbrennungsmotors 60 verbunden und empfangen von der Motorsteuerung 61 einen Eingangswellenvektor $x(n)$, welcher eine aktuelle Drehzahl und ein aktuelles Drehmoment der Verbrennungskraftmaschine 60 angibt. Weiter empfangen der Signalerzeuger/ANC-Kern 91 und der Regler 92 in der Ausführungsform der Figur 6B (nicht jedoch in Figur 6A) das Messsignal $d(n)$ des Mikrofons 41 und über eine Benutzerschnittstelle 97 eine Eingabe eines Benutzers. In der gezeigten Ausführungsform handelt es sich bei der Benutzerschnittstelle 97 um eine Tastatur, über welche ein Benutzer eingeben kann, ob das Fahrzeug weniger oder mehr Schall emittieren soll. Die vorliegende Erfindung ist aber nicht auf eine derartige Benutzerschnittstelle beschränkt.

Der Signalerzeuger/ANC-Kern 91 erzeugt anhand der empfangenen Drehzahl, des Drehmoments und des Messsignals $d(n)$ auf bekannte Weise (beispielsweise unter Verwendung eines FxLMS-Algorithmus) ein Schallsignal $y(n)$, welches geeignet wäre, das dem in der Abgasanlage 40 geführten Schall entsprechende zu überlagernde Signal $d(n)$ auszulöschen, wenn der Lautsprecher mit dem Schallsignal $y(n)$ betrieben werden würde. Dabei berücksichtigt der Signalerzeuger/ANC-Kern 91 die Übertragungsfunktion $S(z)$ des Schallerzeugers 20.

Weiter erzeugt der Regler 92 in Abhängigkeit von der empfangenen Drehzahl, dem empfangenen Drehmoment, dem empfangenen Messsignal $d(n)$ (nur in der Variante der Figur 6B) und der empfangenen Benutzereingabe ein Regelsignal $\lambda(n)$. Konkret sind in dieser Ausführungsform in dem Regler 92 vorab für eine jeweilige Drehzahl, Drehmoment, Messsignal und Benutzereingabe für das Kraftfahrzeug vorab empirisch bestimmte Regelsignale $\lambda(n)$ gespeichert, so dass der Regler 92 nur das für den jeweiligen Betriebszustand geeignete Regelsignal $\lambda(n)$ auswählen muss. Dabei handelt es sich bei den gespeicherten Regelsignalen $\lambda(n)$ jeweils um rationale Zahlen. Im Zeitverlauf wird durch den Regler 92 daher eine Folge von Regelsignalen $\lambda(n)$ ausgegeben, die eine Folge von rationalen Zahlen repräsentieren.

Der Signalerzeuger/ANC-Kern 91 gibt das Schallsignal $y(n)$ und der Regler 92 das Regelsignal $\lambda(n)$ an die ersten und zweiten Gewichter 93, 95 aus.

Der erste Gewichter 93 gewichtet das Schallsignal $y(n)$ mit dem Regelsignal $\lambda(n)$, und invertiert das gewichtete Signal, um unter Berücksichtigung einer Abschätzung $\hat{S}(z)$ der Übertragungsfunktion $S(z)$ des Schallerzeugers 20 ein gewichtetes und invertiertes Signal $\lambda(n)\tilde{u}(n\text{-}1)$ zu erhalten. Dabei bezeichnet $\tilde{u}(n\text{-}1)$ ein zu einem früheren Zeitpunkt zum Zwecke der Überlagerung erzeugtes Signal. Das vom ersten Gewichter 93 ausgegebene gewichtete und invertierte Schallsignal $\lambda(n)\tilde{u}(n\text{-}1)$ wird von dem Addierer 94 zu dem unmodifizierten Rückkoppelsignal $e'(n)$, welches vom Fehlersensor 50 empfangen wird, addiert, um ein modifiziertes Rückkoppelsignal $e(n)$ zu erhalten.

Der Signalerzeuger/ANC-Kern 91 erhält das modifizierte Rückkoppelsignal $e(n)$, und berücksichtigt es bei der Erzeugung des Schallsignals $y(n)$, welches geeignet ist, den in der Abgasanlage 40 geführten Schall $d(n)$ auszulöschen, wenn der Lautsprecher mit dem Schallsignal $y(n)$ betrieben wird.

Der zweite Gewichter 95 gewichtet das Schallsignal $y(n)$ mit $1 - \lambda(n)$ und gibt das so gewichtete Schallsignal $y'(n)$ an den Lautsprecher des Schallerzeugers 20 aus. Somit wird der Lautsprecher mit dem gewichteten Schallsignal $y'(n)$ betrieben. Unter Berücksichtigung der Übertragungsfunktion S(z) des Schallerzeugers 20 wird Schall, der einem gewichteten zur Überlagerung verwendeten Signal $u'(n)$ entspricht, mit in der Abgasanlage geführtem Schall, welcher dem zu überlagernden Signal $d(n)$ entspricht, zur Überlagerung gebracht.

In der vorliegenden Anmeldung bringt der Unterschied zwischen $u(n)$ und $\tilde{u}(n)$ zum Ausdruck bringen, dass $u(n)$ basierend auf der realen Übertragungsfunktion $S(z)$ des Schallerzeugers 20 gebildet wird, und $\tilde{u}(n)$ basierend auf der Abschätzung $\hat{S}(z)$ Übertragungsfunktion des Schallerzeugers 20 gebildet wird. Bei einer guten Abschätzung der Übertragungsfunktion des Schallerzeugers $\hat{S}(z)$ entsprechen $u(n)$ und $\tilde{u}(n)$ einander.

Da das vom Signalerzeuger/ANC-Kern 91 ursprünglich erzeugte Schallsignal $y(n)$ zuvor mit einem Wert gewichtet worden ist, ist das gewichtete Schallsignal $y'(n)$ nicht mehr in der Lage, den in der Abgasanlage 40 geführten Schall vollständig auszulöschen, wenn der Lautsprecher mit dem Schallsignal $y'(n)$ betrieben wird. Vielmehr wird der in der Abgasanlage geführte Schall nur zu einem gewissen Anteil ausgelöscht, welcher Anteil vom Regelsignal $\lambda(n)$ abhängt.

Der dabei im Signalerzeuger/ANC-Kern 91, dem Regler 92, dem ersten Gewichter 93 und dem zweiten Gewichter 95 implementierte Algorithmus basiert somit auf folgenden Überlegungen:

Das dem auszulöschenden, in der Abgasanlage 40 geführten Schall entsprechende zu überlagernde Signal $d(n)$ kann für einen einer bestimmten Motorordnung und Drehzahl entsprechenden Eingangswellenvektor $x(n)$ (und damit eine Grundfrequenz $f_0$) als grundsätzlich harmonisches Signal mit zeitlich veränderter Phase und Amplitude dargestellt werden

$$d(n) = D(n) \sin(\omega_0 n + \phi_d(n)) \qquad\qquad \omega_0 = 2\pi f_0$$

wobei hier "n" den Zeitverlauf angibt (und ein Zeitindex einer zeitdiskreten Reihe ist). $\Phi_d(n)$ wird als "Systemphase" bezeichnet und hängt nur von der Geräuschquelle ab.

Entsprechend muss der für die Auslöschung / Überlagerung vom Lautsprecher zu emittierende Schall ebenfalls einem harmonischen Signal $u(n)$ mit zeitlich veränderter Phase und Amplitude entsprechen:

$$u(n) = U(n) \sin(\omega_0 n + \phi_u(n))$$

Dabei sind $D(n)$ und $\phi_d(n)$ zunächst nicht bekannt. Sobald die ANC-Steuerung konvergiert, ist jedoch folgende Näherung zulässig:

$$\phi_u(n) \approx \phi_d(n) \qquad\qquad (u(n) \text{ und } d(n) \text{ sind in Phase})$$

Deshalb kann $u(n)$ umformuliert werden zu:

$$u(n) = U(n) \sin(\omega_0 n + \phi_d(n)).$$

Nach der Überlagerung des dem in der Abgasanlage 40 geführten Schall entsprechenden zu überlagernden Signals $d(n)$ durch das dem vom Lautsprecher emittierten Schall entsprechenden zur Überlagerung verwendeten Signal $u(n)$ ergibt sich der verbleibende Schall am Endrohr 80 für die Frequenz $f_0$ als Rückkoppelsignal $e(n)$ zu:

$$e(n) = d(n) - u(n)$$

In der Folge ist $e(n)$ ebenfalls eine lineare Kombination harmonischer Signale und kann daher ebenfalls als Funktion der "Systemphase" $\phi_d(n)$ ausgedrückt werden:

$$e(n) = E(n) \sin(\omega_0 n + \phi_d(n))$$

Mit dem erfindungsgemäßen System und Verfahren soll nun die Amplitude $E(n)$ gesteuert werden.

Bei erfolgreicher Schallauslöschung konvergiert $e(n)$ nach einiger Zeit gegen Null, so dass bei erfolgreicher Schallauslöschung gilt:

$$e(n) = d(n) - u(n) \qquad\rightarrow\qquad 0 \approx d(n) - u(n)$$

Diese Formel kann umgeschrieben werden zu:

$$e(n) = d(n) - \lambda\, u(n) + \lambda\, u(n) - u(n) \approx 0$$

und weiter zu

$$d(n) - (1-\lambda)\, u(n) - \lambda\, u(n) \approx 0$$

Dabei ist $\lambda$ eine reelle Zahl der Zahlenfolge $\lambda(n)$. Die vorstehende Formel ist ebenso wie die Zahlenfolge $\lambda(n)$ für jeden Zeitpunkt n berechenbar. Folglich ist es möglich anstelle eines konkreten Wertes $\lambda$ für einen konkreten Zeitpunkt n allgemein eine zeitvariante Variable $\lambda(n)$ zu verwenden.

Es werden folgende neue Variablen $e'(n)$, $u'(n)$ und $y'(n)$ eingeführt, welche auch in den vorstehenden Figuren 6A und 6B verwendet werden:

$$e'(n) = d(n) - (1-\lambda)\, u(n) \qquad \rightarrow \qquad e(n) = e'(n) - \lambda\, u(n) \approx 0$$

(der Wert e(n) konvergiert gegen Null)

$$u'(n) = (1-\lambda)\, u(n) = (1-\lambda)\, conv[s(n), y(n)] = conv[s(n), (1-\lambda)y(n)]$$

(wobei *conv* die Faltung zweier Zeitreihen bezeichnet)

$$y'(n) = (1-\lambda)\, y(n)$$

Wie bereits ausgeführt, soll mittels des Systems und Verfahrens gemäß der vorliegenden Erfindung keine vollständige Schallauslöschung angestrebt werden, sondern lediglich eine einstellbare Dämpfung. Das angestrebte (unmodifizierte) Rückkoppelsignal nach der Überlagerung (FINAL) ergibt sich daher zu

$$e'_{FINAL}(n) \approx \lambda\, u(n)$$

Gleichzeitig gilt bei vollständiger Schallauslöschung

$$e'(n) = d(n) - (1-\lambda)u(n) \approx d(n) - (1-\lambda)\, d(n)$$

woraus sich ergibt

$$e'(n)\,) \approx \lambda\, d(n)$$

Hieraus ergibt sich

$$e'_{FINAL}(n) \approx \lambda d(n)$$

Das durch den Fehlersensor 50 gemessene (unmodifizierte) Rückkoppelsignal entspricht einem Faktor der mit dem zu überlagernden Signal multipliziert wird, welches in der Abgasanlage geführtem Schall entspricht, wenn das System und Verfahren zur Beeinflussung von Schall nicht verwendet wird.

Eine Analyse der Variablen $\lambda(n)$ hat ergeben, dass die Variable $\lambda(n)$ von der Quelle des zu manipulierenden Schalls $d(n)$ abhängt und damit mit dem zu manipulierenden Schall direkt oder indirekt in Beziehung steht. Diese Abhängigkeit manifestiert sich bei dem gezeigten System, welches zusammen mit der Abgasanlage eines verbrennungsmotorisch betriebenen Fahrzeugs verwendet wird, in folgenden Parametern (params): der Drehzahl oder Motorlast des Motors, einer Gaspedalstellung oder einem Gaspedalgradienten, wobei das Gaspedal den Motor steuert, einem Zustand einer Kupplung oder eines Getriebes, welche mit dem Motor verbunden sind, einem Betriebsmodus des Motors, einer Spannung einer mit dem Motor verbundenen Batterie und einem Betriebszustand des Verbrennungsmotors.

Deshalb kann zur Darstellung der Variablen $\lambda(n)$ eine weitere Funktion $\varXi(params)$ eingeführt werden, welche von den vorstehend genannten Abhängigkeiten (Parametern) abhängt.

$$\lambda(n) = \varXi(params)$$

Somit kann der Wert der Variablen $\lambda$ für jeden Zeitpunkt n aus einer reellen Funktion $\varXi(params)$ berechnet werden. Wie aus einer Umstellung dieser Formel ersichtlich ist, ist das Rückkoppelsignal des für eine Grundfrequenz $f_0$ nach der Überlagerung verbleibenden Schalls (mit einem gewissen Toleranzbereich) gleich dem Produkt des Schalls bei der gleichen Frequenz mit einem frei einstellbaren Koeffizienten $\lambda$.

Dies bedeutet im Hinblick auf die Variable $u'(n)$:

$$u'(n) = (1-\lambda)u(n) = (1-\lambda)conv[s(n), y(n)] = conv[s(n), (1-\lambda)y(n)]$$

woraus sich ergibt:

$$y'(n) = (1-\lambda)y(n)$$

Im Hinblick auf $e'(n)$ ergibt sich aus

$$e(n) = e'(n) - \lambda\,u(n)$$

das Problem der Gefahr einer algebraischen Schleife, da $u(n)$ selbst wiederum von $e(n)$ abhängt. Dieses Problem kann dadurch umgangen werden, dass zeitlich geringfügig zurückliegende Werte von $u(n)$ verwendet werden (diese zeitlich zurückliegenden Werte werden als "n-1" bezeichnet). Dabei sollte der zeitliche Abstand so klein wie möglich gewählt werden:

$$e(n) = e'(n) - \lambda\,u(n\text{-}1) = e'(n) - \lambda\,conv[s(n\text{-}1), y(n\text{-}1)]$$

$s(n\text{-}1)$ ist nicht bekannt. Allerdings ist es möglich, die Impulsantwort $\hat{s}(n)$ der Abschätzung der Übertragungsfunktion des Schallerzeugers $\hat{S}(z)$der für die Schallerzeugung verwendeten Komponenten empirisch zu bestimmen.
Bei hinreichend kleinem zeitlichem Abstand gilt:

$$s(n\text{-}1) \approx \hat{s}(n)$$

so dass sich aus

$$e(n) = e'(n) - \lambda\,conv[s(n\text{-}1), y(n\text{-}1)]$$

ergibt:

$$e(n) \approx e'(n) - \lambda\,conv[\hat{s}(n), y(n\text{-}1)]$$

Die Werte für $\lambda(n)$ bzw. $\Xi(params)$ lassen sich empirisch bestimmen und durch entsprechende Bedatung vorgeben.
Im Folgenden wird unter Bezugnahme auf Figur 8 ein Verfahren zum Betreiben des vorstehend beschriebenen Systems beschrieben.
Zunächst wird in Schritt S1 ein Eingangswellenvektor $\mathbf{x}$(n) erzeugt. Dieser berücksichtigt zu manipulierenden Schall, der mittels des Mikrofons 41 gemessen wurde und von der Motorsteuerung 61 empfangene Daten.
Parallel dazu wird über die Benutzerschnittstelle 97 eine Benutzereingabe empfangen (Schritt S2).
Parallel dazu wird in Schritt S3 der überlagerte Schall gemessen und ein entsprechendes Rückkoppelsignal $e'(n)$ ausgegeben.
Im Schritt S4 wird durch den Regler 92 unter Verwendung einer aus der Bedatung erhaltenen Variablen $\lambda(n)$, welche von einem Betriebszustand der Geräuschquelle abhängt, ein Regelsignal $\lambda(n)$ erzeugt, welches einen Wert einer Folge rationaler Zahlen repräsentiert. Dieser Wert kann größer, kleiner oder gleich Null sein.
In Schritt S5 wird aus dem gemessenen Rückkoppelsignal e'(n), einem Wert $\lambda$ des Regelsignals $\lambda(n)$, einer Impulsantwort $\hat{s}(n)$ einer abgeschätzten Übertragungsfunktion des Schallerzeugers $\hat{S}(z)$ und einem vom ANC-Kern 91 zu einem früheren Zeitpunkt an einen Schallerzeuger ausgegebenen (Schall-)Signal $y(n\text{-}1)$ nach der Formel e(n) = e'(n) - $\lambda$ conv[$\hat{s}(n)$, y(n-1)] ein modifiziertes Rückkoppelsignal e(n) erhalten.
In Schritt S6 wird anhand der Übertragungsfunktion der Geräuschquelle $P(z)$, des Eingangswellenvektors $\mathbf{x}$(n) und des modifizierten Rückkoppelsignals $e(n)$ ein Schallsignal $y(n)$ berechnet. Dieses berechnete Schallsignal y(n) wird In Schritt S7 durch den zweiten Gewichter 95 mit der Differenz aus Eins und dem Wert $\lambda$ des Regelsignals $\lambda(n)$ gewichtet, um ein gewichtetes Schallsignal $y'(n)$ zu erhalten $(y'(n) = (1-\lambda)y(n))$.

Das gewichtete Schallsignal *y'(n)* wird in Schritt S7 zur Erzeugung eines Audiosignals an den Schallerzeuger 20 ausgegeben.

In den Figuren 9A bis 11B ist gezeigt, welche Wirkung das erfindungsgemäße System und Verfahren entfaltet. Dabei wurde die Abgasanlage eines verbrennungsmotorisch betriebenen Fahrzeugs entsprechend überarbeitet.

Wie aus Figur 9A ersichtlich, ist es mittels des erfindungsgemäßen Systems möglich, den Schalldruckpegel gegenüber dem unmanipulierten Schall (ANC AUS) abzusenken (bis zur Zeit 1,75 Sekunden), nicht zu manipulieren (zwischen ca. 1,75 Sekunden und ca. 2,25 Sekunden) oder anzuheben (ab etwa 2,25 Sekunden). Dabei war der Regler 92 so eingerichtet, dass das Regelsignal *λ(n)* so erzeugt wurde, dass ein Abstand des Schalldrucks bei aktiviertem ANC-System (ANC-AN) im Zeitverlauf ab ca. 2,25 Sekunden größer wurde. Dies ist vorliegend dadurch erfolgt, dass die Drehzahl des Motors im Zeitverlauf stetig angehoben wurde, und für die Erstellung des Regelsignals *λ(n)* verwendet wurde. Ergänzend ist der sich am Aktor (Schallerzeuger) ergebende Druckpegel gezeigt. Die Stufen im Signalverlauf des Schalldruckpegels und des Druckpegels des Aktors sind darauf zurückzuführen, dass in dem Beispiel das Regelsignal *λ(n)* aus einer drehzahlabhängigen Variablen *Ξ(Drehzahl)* berechnet wurde, welche Variable *Ξ(Drehzahl)* für unterschiedliche Drehzahlbereiche unterschiedliche Werte annimmt.

In Figur 9B ist hingegen der Schalldruckverlauf eines Systems aus dem Stand der Technik gezeigt. Ersichtlich wird bei einem herkömmlichen System (ANC AN) kontinuierlich versucht, den Schalldruckpegel auf einen möglichst niedrigen Wert (hier etwa 40 dB) zu senken. Die bei dem erfindungsgemäßen System mögliche wahlweise Absenkung und Anhebung des Schalldruckpegels ist im Stand der Technik nicht möglich.

In Figur 10 sind verschiedene Messergebnisse gezeigt, wie sie sich bei unterschiedlicher Bedatung des erfindungsgemäßen System bei der Abgasanlage eines Dieselfahrzeugs eingestellt haben. Ersichtlich erlaubt es das erfindungsgemäße System, den Schalldruckpegel (gestrichelte Linien zeigen den Schalldruckpegel bei Verwendung der Erfindung) gegenüber dem Schalldruckpegel des unmanipulierten Schalls (schwarze durchgezogene Linie) im Bereich zwischen 1.000 Umdrehungen pro Minute bis etwa 4.500 Umdrehungen pro Minute um einen weitgehend konstanten Wert abzusenken, und dabei dem Verlauf des Schalldruckpegels des unmanipulierten Schalls weitgehend zu folgen. Da dem Verlauf des Schalldruckpegels weitgehend gefolgt wird, hört sich das erfindungsgemäße System zur Beeinflussung von Schall besonders natürlich an. Zum Vergleich ist in der Figur als unterste Linie der Verlauf des Schalldruckpegels bei einem System aus dem Stand der Technik gezeigt. Ersichtlich ist hier die Abweichung vom Verlauf des Schalldruckpegels des unmanipulierten Schalls unterschiedlich groß.

Aus den Figuren 11A und 11B ist ersichtlich, wie sich die Verwendung des erfindungsgemäßen Systems nachweisen lässt. Dabei wurde im Zeitverlauf die Drehzahl eines verwendeten Verbrennungsmotors zunächst linear von 1.000 Umdrehungen pro Minute auf 2.000 Umdrehungen pro Minute erhöht, einige Zeit konstant gehalten und dann wieder linear abgesenkt. Der Schalldruckpegel für die dritte Motorordnung wurde gemessen.

Figur 11A zeigt den Verlauf des Schalldruckpegels bei angeschaltetem bzw. abgeschaltetem System sowie den Druckpegel des Aktors bei angeschaltetem System. Ersichtlich bewirkt das erfindungsgemäße System eine weitgehend konstante Dämpfung des Schalldruckpegels um etwa 7 dB.

In Figur 11B wurde die Abgasanlage mechanisch gedämpft und so insgesamt um etwa 6 dB leiser gemacht. Ersichtlich ändert diese mechanische Dämpfung nichts daran, dass das erfindungsgemäße System eine weitgehend konstante Dämpfung des Schalldruckpegels um etwa 7 dB bewirkt. Es wird gleichzeitig weniger Energie für den Aktor benötigt. Dieser Effekt tritt bei herkömmlichen Systemen nicht auf.

Somit kann ein Nachweis der Erfindung bei verbrennungsmotorisch betriebenen Fahrzeugen mit folgendem Verfahren erfolgen:

Zunächst wird mittels eines Fehlermikrofons in der Abgasanlage stromabwärts des Bereichs der Schallüberlagerung der Schalldruckpegel bei ausgeschaltetem System unter kontrollierten Bedingungen (z.B. bei einer Drehzahlrampe von 800 bis 4.500 Umdrehungen pro Minute bei konstanter Last) gemessen.

Anschließend wird der Schalldruckpegel mit demselben Fehlermikrofon unter denselben Bedingungen bei eingeschaltetem System gemessen. Gleichzeitig wird die Anregung des Aktors (Schallerzeugers) gemessen. Es werden einige stationäre Betriebspunkte der gewonnenen Messkurven ausgewählt.

Nun wird die Geometrie der passiven Abgasanlage durch mechanische Maßnahmen so verändert, dass der mittels des Fehlermikrofons gemessene Schalldruckpegel leiser oder lauter wird (um z.B. etwa 3 dB).

Anschließend wird die Messung bei eingeschaltetem System für die stationären Betriebspunkte wiederholt. Die gemessenen Signale werden nach ihrer Motorordnung spezifisch gefiltert.

Wird die vorliegende Erfindung verwendet, sollte die mechanische Manipulation der Abgasanlage nicht zur Instabilität des Systems zur Beeinflussung von Schall führen. Weiter sollte das Verhältnis des mit dem Fehlermikrofon gemessenen Schalldruckpegels bei ausgeschaltetem System zum mit dem Fehlermikrofon gemessenen Schalldruckpegel bei eingeschaltetem System beim mechanisch manipulierten System unter Berücksichtigung gewisser Toleranzen dem Verhältnis des mit dem Fehlermikrofon gemessenen Schalldruckpegels bei ausgeschaltetem System zum mit dem Fehlermikrofon gemessenen Schalldruckpegel bei eingeschaltetem System beim mechanisch nicht manipulierten System entsprechen (für die stationären Betriebspunkte). Entsprechend sollte die Differenz zwischen dem mit dem Fehlermikrofon bei ausgeschaltetem System gemessenen Schalldruckpegel und dem mit dem Fehlermikrofon bei eingeschaltetem System gemessenen Schalldruckpegel beim mechanisch manipulierten System in etwa der Differenz zwischen dem mit dem Fehlermikrofon bei ausgeschaltetem System gemessenen Schalldruckpegel und dem mit dem Fehlermikrofon bei eingeschaltetem System gemessenen Schalldruckpegel beim mechanisch nicht manipulierten System entsprechen (für die stationären Betriebspunkte).

**Bezugszeichenliste**

| | |
|---|---|
| 1 | Endrohr |
| 2 | Lautsprecher |
| 3 | Schallerzeuger |
| 4 | Abgasanlage |
| 5 | Fehlermikrofon |
| 6 | Verbrennungskraftmaschine |
| 6' | Motorsteuerung |
| 6" | Ansauganlage |
| 7 | System zur aktiven Schallauslöschung |
| 8 | Mündung |
| 9 | Regelung |
| 20 | Schallerzeuger /Aktor |
| 40 | Abgasanlage |
| 41 | Mikrofon |
| 50 | Fehlersensor |
| 60 | Verbrennungsmotor |
| 80 | Endrohr |
| 90 | Antischall-System |
| 91 | Signalerzeuger / ANC-Kern |
| 92 | Regler |
| 93 | erster Gewichter |
| 94 | Addierer |
| 95 | zweiter Gewichter |
| 96 | ANC-Erweiterung |
| 97 | Benutzerschnittstelle |
| $d(n)$ | von der Übertragungsfunktion P(z) erzeugtes und vom Mikrofon gemessenes zu überlagerndes Signal (entspricht dem von der Geräuschquelle erzeugten Geräusch) |
| $e(n)$ | (modifiziertes) Rückkoppelsignal (entspricht dem Schalldruck des überlagerten Geräuschs) |
| $e'(n)$ | unmodifiziertes Rückkoppelsignal |
| $e(z)$ | z-Transformierte des Signals $e(n)$ |
| $EO_i$ | i-te Motorordnung |
| $f_0$ | Grundfrequenz |
| $P(z)$ | z-Transformierte der Übertragungsfunktion der Geräuschquelle (entspricht der Funktion, auf welcher die Signalerzeugung (und damit Schallerzeugung) durch die Geräuschquelle beruht) |
| $u(n)$ | zur Überlagerung verwendetes Signal (entspricht dem Schalldruck eines Schallerzeugers, welcher den zu überlagernden Schall erzeugt) |
| $u'(n)$ | gewichtetes zur Überlagerung verwendetes Signal |
| $u(n-1)$ | früheres zur Überlagerung verwendetes Signal |
| $u(z)$ | z-Transformierte des Signals $u(n)$ |
| $S(z)$ | z-Transformierte der Übertragungsfunktion des Schallerzeugers (entspricht der Umsetzung des Signals $y(n)$ in das Signal $u(n)$) |
| $s(n)$ | Impulsantwort der Übertragungsfunktion des Schallerzeugers $S(z)$ |
| $\hat{S}(z)$ | Abschätzung der z-Transformierten der Übertragungsfunktion des Schallerzeugers |
| $\hat{s}(n)$ | Impulsantwort der Abschätzung der Übertragungsfunktion des Schallerzeugers $\hat{S}(z)$ |
| $\boldsymbol{w}(n)$ | Phasor-Vektor / Verstärkung |
| $\boldsymbol{w}^T(n)$ | Transponierte des Phasor-Vektors $\boldsymbol{w}(n)$ |
| $w_1(n), w_2(n)$ | Verstärkungsfaktoren |
| $\boldsymbol{x}(n)$ | Eingangswellenvektor |

$\mathbf{x}^T(n)$ — Transponierte des Eingangswellenvektors $\mathbf{x}(n)$
$y(n)$ — vom ANC-Kern ausgegebenes (Schall-)Signal
$y'(n)$ — gewichtetes, vom ANC-Kern ausgegebenes (Schall-)Signal
$y_1(n)$, $y_2(n)$ — vom ANC-Kern ausgegebene, relativ zueinander um 90° verschobene Signale
$y(z)$ — z-Transformierte des Signals $y(n)$
$\mu$ — Anpassungsgeschwindigkeit
$\lambda(n)$ — Regelsignal
$\varXi(params)$ — Variable zur Darstellung von $\xi(n)$

**Patentansprüche**

1. System zur aktiven Schallbeeinflussung, aufweisend:

   einen Schallerzeuger (20), welcher ausgebildet ist, bei Beaufschlagung mit einem Audiosignal Schall zu erzeugen und mit einem zu manipulierenden Schall zu überlagern,
   einen Fehlersensor (50), welcher überlagerten Schall, der sich aus der Überlagerung des von dem Schallerzeuger (20) erzeugten Schalls mit dem zu manipulierendem Schall ergibt, misst und ein entsprechendes Rückkoppelsignal (e'(n)) ausgibt;
   einen Signalerzeuger (91), der ein Schallsignal (y(n)) erzeugt und ausgibt;
   einen Regler (92), der ein Regelsignal ($\lambda$(n)) erzeugt, wobei das Regelsignal ($\lambda$(n)) einen Wert einer Folge von rationalen Zahlen repräsentiert;
   einen ersten Gewichter (93), der das von dem Signalerzeuger (91) ausgegebene Schallsignal (y(n)) empfängt, z-Transformiert, mit einer Abschätzung der z-Transformierten der Übertragungsfunktion des Schallerzeugers ($\hat{S}(z)$) konvoliert und mit dem von dem Regler (92) erzeugten Regelsignal ($\lambda$(n)) gewichtet und invertiert;
   einen Addierer (94), der das so gewichtete und invertierte Schallsignal zu dem Rückkoppelsignal (e'(n)) addiert, und das so erhaltene modifizierte Rückkoppelsignal (e(n)) an den Signalerzeuger (91) ausgibt; und
   einen zweiten Gewichter (95), der das von dem Signalerzeuger (91) ausgegebene Schallsignal (y(n)) mit der Differenz aus Eins und dem von dem Regler (92) erzeugten Regelsignal ($\lambda$(n)) gewichtet und das so gewichtete Schallsignal (y'(n)) zur Erzeugung des Audiosignals ausgibt;
   wobei der Signalerzeuger (91) ausgebildet ist, das Schallsignal (y(n)) in Abhängigkeit von dem modifizierten Rückkoppelsignal (e(n)) zu erzeugen; und
   wobei der Regler (92) das Regelsignal $\lambda$(n) in Abhängigkeit von einem Eingangswellenvektor ($\mathbf{x}$(n)) erzeugt, welcher von einem Zustand der Quelle des zu manipulierenden Schalls abhängt.

2. System nach Anspruch 1, wobei der Eingangswellenvektor ($\mathbf{x}$(n)) wenigstens eines von

   - Drehzahl oder Motorlast oder Drehmoment eines Motors (60), der den zu manipulierenden Schall erzeugt,
   - einer Gaspedalstellung oder einem Gaspedalgradienten, wobei das Gaspedal einen Motor (60) steuert, der den zu manipulierenden Schall erzeugt,
   - einem Zustand einer Kupplung oder eines Getriebes, welche mit einem Motor (60), der den zu manipulierenden Schall erzeugt, verbunden sind,
   - einem Betriebsmodus eines Motors (60), der den zu manipulierenden Schall erzeugt,
   - einer Spannung einer mit einem Motors (60), der den zu manipulierenden Schall erzeugt, verbundenen Batterie, und
   - einem Betriebszustand eines Motors (60), der den zu manipulierenden Schall erzeugt,

   ist.

3. System nach Anspruch 1 oder 2,
   weiter aufweisend ein Mikrofon (41), welches den zu manipulierenden Schall misst und ein diesem entsprechendes Messsignal (d(n)) ausgibt, wobei der Regler (92) ausgebildet ist, das Regelsignal ($\lambda$(n)) in Abhängigkeit von dem Messsignal (d(n)) zu erzeugen, welches durch das Mikrofon (41) ausgeben wird; und/oder
   weiter aufweisend eine Benutzerschnittstelle (97), welche ausgebildet ist, eine Benutzereingabe zu empfangen, wobei der Regler (92) ausgebildet ist, das Regelsignal ($\lambda$(n)) in Abhängigkeit von der Benutzereingabe zu erzeugen, welche über die Benutzerschnittstelle (97) empfangen wird; und/oder
   wobei der Regler (92) mit einer Motorsteuerung (61) eines Motors verbindbar und ausgebildet ist, das Regelsignal ($\lambda$(n)) in Abhängigkeit von Signalen zu erzeugen, welche von der Motorsteuerung (61) empfangen werden, oder wobei der Regler (92) ausgebildet ist, das Regelsignal ($\lambda$(n)) in Abhängigkeit von Drehzahlgebersignalen eines Motors zu erzeugen.

4. System nach einem der Ansprüche 1 bis 3, wobei der Signalerzeuger (91) weiter ausgebildet ist, den Eingangswellenvektor (**x**(n)) zu erhalten, welcher von dem zu manipulierenden Schall abhängt, und das Audiosignal (y(n)) in Abhängigkeit von dem Eingangswellenvektor (**x**(n)) zu erzeugen.

5. System nach Anspruch 4, weiter aufweisend ein Mikrofon (41), welches den zu manipulierenden Schall misst und ein diesem entsprechendes Messsignal (d(n)) ausgibt, wobei der Signalerzeuger (91) ausgebildet ist, das Schallsignal (y(n)) in Abhängigkeit von dem Messsignal (d(n)) zu erzeugen.

6. System nach einem der Ansprüche 1 bis 5, wobei der erste Gewichter (93) anstelle des von dem Signalerzeuger (91) zu einem aktuellen Zeitpunkt ausgegebenen Schallsignals (y(n)) ein von dem Signalerzeuger (91) zu einem früheren Zeitpunkt ausgegebenes Schallsignal (y(n-1)) verwendet.

7. System nach Anspruch 6, wobei die früheren Zeitpunkte (n-1) des von dem Signalerzeuger (91) ausgegebenen Signals (y(n-1)) gegenüber dem von dem Signalerzeuger (91) zu einem aktuellen Zeitpunkt ausgegebenen Schallsignal (y(n)) um ein Einfaches oder Mehrfaches einer internen Taktfrequenz des Signalerzeugers (91) zurückliegen.

8. Kraftfahrzeug aufweisend:

   eine Verbrennungskraftmaschine (60) mit einer Motorsteuerung (61) und/oder einem Drehzahlgeber; und
   ein System nach einem der Ansprüche 1 bis 7;
   wobei die Motorsteuerung (61) und/oder der Drehzahlgeber mit dem Signalerzeuger (91) und/oder dem Regler (92) verbunden und ausgebildet ist, eine Drehzahl und/oder eine Motorlast und/oder ein Drehmoment der Verbrennungskraftmaschine (60) zu ermitteln und als Eingangswellenvektor (**x**(n)) an den Signalerzeuger (91) und/oder den Regler (92) auszugeben.

9. Verfahren zur aktiven Schallbeeinflussung, aufweisend die Schritte:

   (S6) Erzeugen eines Schallsignals (y(n));
   (S3) Messen eines überlagerten Schalls, der sich aus der Überlagerung von in Abhängigkeit vom Schallsignal (y(n)) erzeugtem Schall mit zu manipulierendem Schall ergibt, um ein entsprechendes Rückkoppelsignal (e'(n)) zu erhalten;
   (S4) Erzeugen eines Regelsignals ($\lambda$(n)), wobei das Regelsignal ($\lambda$(n)) einen Wert einer Folge von rationalen Zahlen repräsentiert;
   (S5) Konvolution der z-Transformierten des Schallsignals (y(n)) mit einer Abschätzung der z-Transformierten der Übertragungsfunktion des Schallerzeugers ($\hat{S}(z)$) und Gewichten des erhaltenen Signals mit dem Regelsignal ($\lambda$(n)) und Invertieren des so erhaltenen gewichteten Signals;
   (S5) Addieren des so gewichteten und invertierten Signals zu dem Rückkoppelsignal (e'(n)), um ein modifiziertes Rückkoppelsignal (e(n)) zu erhalten, wobei im Schritt des Erzeugens des Schallsignals (y(n)) das Schallsignal (y(n)) unter Verwendung des modifizierten Rückkoppelsignals (e(n)) erzeugt wird;
   (S7) Gewichten des Schallsignals (y(n)) mit der Differenz aus Eins und dem Regelsignal ($\lambda$(n)), um ein gewichtetes Schallsignal (y'(n)) zu erhalten; und
   (S8) Verwendung des gewichteten Schallsignals (y'(n)) zur Erzeugung des in Abhängigkeit vom Schallsignal (y(n)) erzeugten Schalls;
   wobei in dem Schritt des Erzeugens des Regelsignals ($\lambda$(n)) das Regelsignal ($\lambda$(n)) unter Verwendung eines Eingangswellenvektors (**x**(n)) erzeugt wird, welches von dem zu manipulierenden Schall abhängt.

10. Verfahren nach Anspruch 9, weiter aufweisend:

    (S11) Messen des zu manipulierenden Schalls um ein diesem entsprechendes Messsignal (d(n)) zu erhalten, wobei in dem Schritt des Erzeugens des Regelsignals das Regelsignal unter Verwendung des Messsignals (d(n)) erzeugt wird; und/oder
    (S12) Empfangen einer Benutzereingabe, wobei in dem Schritt des Erzeugens des Regelsignals ($\lambda$(n)) das Regelsignal ($\lambda$(n)) in Abhängigkeit von der Benutzereingabe erzeugt wird.

11. Verfahren nach Anspruch 10, wobei das Regelsignal ($\lambda$(n)) von wenigstens einem von einer Drehzahl oder Motorlast des Motors, einer Gaspedalstellung oder einem Gaspedalgradienten, einem Zustand einer Kupplung oder eines Getriebes, einem Betriebsmodus des Motors, einer Spannung einer Batterie und einem Betriebszustand des Verbrennungsmotors abhängt.

12. Verfahren nach einem der Ansprüche 9 bis 11, wobei im Schritt (S5) des Faltens der z-Transformierten des Schallsignals (y(n)) mit einer Abschätzung der z-Transformierten der Übertragungsfunktion des Schallerzeugers (Ŝ(z)) und Gewichten des erhaltenen Signals mit dem Regelsignal (λ(n)) und Invertieren des so erhaltenen gewichteten Signals anstelle eines einem aktuellen Zeitpunkt entsprechenden Schallsignals (y(n)) ein einem früheren Zeitpunkt entsprechendes Schallsignal (y(n-1)) verwendet wird.

**Claims**

1. System for actively influencing noise, having
   a sound generator (20), which is configured to generate sound when an audio signal is sent to it and to superimpose the generated sound to a sound to be manipulated,
   an error sensor (50), which measures superimposed sound, which is obtained from the superimposition of the sound generated by the sound generator (20) with the sound to be manipulated and outputs a corresponding feedback signal (e'(n));
   a signal generator (91), which generates and outputs a sound signal (y(n));
   a controller (92), which generates a control signal (λ(n)), wherein the control signal (λ(n)) represents a value of a sequence of rational numbers;
   a first weighter (93), which receives the sound signal (y(n)) outputted by the signal generator (91), z-transforms it, convolutes it with an estimate of the z-transform of the transfer function of the sound generator (Ŝ(z)) and weights and inverts it with the control signal (λ(n)) generated by the controller (92);
   an adder (94), which adds the sound signal thus weighted and inverted to the feedback signal (e'(n)) and outputs the modified feedback signal (e(n)) thus obtained to the signal generator (91); and
   a second weighter (95), which weights the sound signal (y(n)) outputted by the signal generator (91) with the difference between one and the control signal (λ(n)) generated by the controller (92) and outputs the sound signal (y'(n)) thus weighted to generate the audio signal;
   wherein the signal generator (91) is configured to generate the sound signal (y(n)) as a function of the modified feedback signal (e(n));and
   wherein the controller (92) generates the control signal λ(n) as a function of an input wave vector (**x**(n)), which depends on a state of the source of the sound to be manipulated.

2. System in accordance with claim 1, wherein the input wave vector (**x**(n)) represents at least one of

   - speed of rotation or engine load or torque of an engine (60), which generates the sound to be manipulated,
   - an accelerator position or an accelerator gradient, wherein the accelerator controls an engine (60), which generates the sound to be manipulated,
   - a state of a clutch or a transmission, which are connected to an engine (60), which generates the sound to be manipulated,
   - a mode of operation of an engine (60), which generates the sound to be manipulated,
   - a voltage of a battery connected to an engine (60), which generates the sound to be manipulated, and
   - an operating state of an engine (60), which generates the sound to be manipulated.

3. System in accordance with claim 1 or 2,
   further having a microphone (41), which measures the sound to be manipulated and outputs a measured signal (d(n)) corresponding to this, wherein the controller (92) is configured to generate the control signal (λ(n)) as a function of the measured signal (d(n)), which is outputted by the microphone (41); and/or
   further having a user interface (97), which is configured to receive a user input, wherein the controller (92) is configured to generate the control signal (λ(n)) as a function of the user input, which is received via the user interface (97); and/or
   wherein the controller (92) can be connected to an engine control (61) of an engine and is configured to generate the control signal (λ(n)) as a function of signals that are received from the engine control (61), or wherein the controller (92) is configured to generate the control signal (λ(n)) as a function of speed of engine speed sensor signals of an engine.

4. System in accordance with one of the claims 1 through 3, wherein the signal generator (91) is further configured to receive the input wave vector (**x**(n)), which depends on the sound to be manipulated, and to generate the audio signal (y(n)) as a function of the input wave vector (**x**(n)).

5. System in accordance with claim 4, further having a microphone (41), which measures the sound to be manipulated and outputs a measured signal (d(n)) corresponding to this, wherein the signal generator (91) is configured to generate the sound signal (y(n)) as a function of the measured signal (d(n)).

6. System in accordance with one of the claims 1 through 5, wherein the first weighter (93) uses a sound signal (y(n-1)) outputted by the signal generator (91) at an earlier time instead of the sound signal (y(n)) outputted by the signal generator (91) at a current time.

7. System in accordance with claim 6, wherein the earlier times (n-1) of the signal (y(n-1)) outputted by the signal generator (91) precede the sound signal (y(n)) outputted by the signal generator (91) at a current time by a single internal clock frequency or a multiple of an internal clock frequency of the signal generator (91).

8. Motor vehicle, having
an internal combustion engine (60) with an engine control (61) and/or with an engine speed sensor; and
a system in accordance with one of the claims 1 through 7;
wherein the engine control (61) and/or the engine speed sensor are connected to the signal generator (91) and/or to the controller (92) and are configured to determine a speed of rotation and/or an engine load and/or a torque of the internal combustion engine (60) and to output it as an input wave vector (**x**(n)) to the signal generator (91) and/or to the controller (92).

9. Method for actively influencing sound, having the steps of

(S6) generating a sound signal (y(n));
(S3) measuring a superimposed sound, which is obtained from the superimposition of sound generated as a function of the sound signal (y(n)) to sound to be manipulated in order to obtain a corresponding feedback signal (e'(n));
(S4) generating a control signal ($\lambda$(n)), wherein the control signal ($\lambda$(n)) represents a value of a sequence of rational numbers;
(S5) convolution of the z-transform of the sound signal (y(n)) with an estimate of the z-transform of the transfer function of the sound generator ($\hat{S}(z)$) and weighting of the signal obtained with the control signal ($\lambda$(n)) and inversion of the weighted signal thus obtained;
(S5) adding of the signal thus weighted and inverted to the feedback signal (e'(n)) in order to obtain a modified feedback signal (e(n)), wherein the sound signal (y(n)) is generated in the step of generating the sound signal (y(n)) with the use of the modified feedback signal;
(S7) weighting of the sound signal (y(n)) with the difference between one and the control signal ($\lambda$(n)) in order to obtain a weighted sound signal (y'(n)); and
(S8) using the weighted sound signal (y'(n)) to generate the sound generated as a function of the sound signal (y(n));

wherein the control signal ($\lambda$(n)) is generated in the step of generating the control signal ($\lambda$(n)) with the use of an input wave vector (**x**(n)), which depends on the sound to be manipulated.

10. Method in accordance with claim 9, further having:

(S11) measuring of the sound to be manipulated in order to obtain a measured signal (d(n)) corresponding to this, wherein the control signal is generated in the step of generating the control signal with the use of the measured signal (d(n)); and/or
(S12) receiving of a user input, wherein the control signal ($\lambda$(n)) is generated in the step of generating the control signal ($\lambda$(n)) as a function of the user input.

11. Method in accordance with claim 10, wherein the control signal ($\lambda$(n)) depends on at least one of a speed of rotation or engine load of the engine, an accelerator position or an accelerator gradient, a state of a clutch or a transmission, a mode of operation of the engine, a voltage of a battery and an operating state of the internal combustion engine.

**12.** Method in accordance with one of the claims 9 through 11, wherein a sound signal (y(n-1)) corresponding to an earlier time is used instead of a sound signal (y(n)) corresponding to a current time in step (S5) of convoluting the z-transform of the sound signal (y(n)) with an estimate of the transform of the transfer function of the sound generator ($\hat{S}$(z)) and of weighting the signal obtained with the control signal ($\lambda$(n)) and inverting the weighted signal thus obtained.

**Revendications**

**1.** Système pour influer activement sur un son, comprenant :

un générateur de son (20) qui est conçu pour générer un son lorsqu'un signal audio est appliqué et pour le superposer à un son à manipuler,
un capteur d'erreur (50) qui mesure un son superposé généré à partir de la superposition du son généré par le générateur de son (20) avec le son à manipuler et qui délivre en sortie un signal de rétroaction (e'(n)) correspondant ;
un générateur de signal (91) qui génère un signal sonore (y(n)) et le délivre en sortie ;
un régulateur (92) qui génère un signal régulateur ($\lambda$(n)), dans lequel le signal régulateur ($\lambda$(n)) représente une valeur d'une séquence de nombres rationnels ;
un premier pondérateur (93) qui reçoit le signal sonore (y(n)) délivré en sortie du générateur de signal (91), la transformée en z, qu'il convolue avec une estimation de la transformée en z de la fonction de transfert du générateur de son (S(z)), le pondère avec le signal régulateur ($\lambda$(n)) généré par le régulateur (92) et l'inverse ;
un additionneur (94) qui additionne le signal sonore ainsi pondéré et inversé au signal de rétroaction (e'(n)) et qui délivre en sortie le signal de rétroaction (e(n)) modifié ainsi généré au générateur de signal (91) ; et
un second pondérateur (95) qui pondère le signal sonore (y(n)) délivré en sortie du générateur de signal (91) avec la différence de un et le signal régulateur ($\lambda$(n)) généré par le régulateur (92) et qui délivre en sortie le signal sonore (y'(n)) ainsi pondéré pour générer le signal audio ;
dans lequel le générateur de signal (91) est conçu pour générer le signal sonore (y(n)) en fonction du signal de rétroaction (e(n)) modifié ; et
dans lequel le régulateur (92) génère le signal régulateur $\lambda$(n) en fonction d'un vecteur d'onde d'entrée (x(n)), lequel est fonction d'un état de la source du son à manipuler.

**2.** Système selon la revendication 1, dans lequel le vecteur d'onde d'entrée (x(n)) est au moins un parmi

- vitesse de rotation ou charge moteur ou couple d'un moteur (60) qui génère le son à manipuler,
- une position de pédale d'accélérateur ou un gradient de pédale d'accélérateur, dans lequel la pédale d'accélérateur commande un moteur (60), lequel génère le son à manipuler,
- un état d'un embrayage ou d'une transmission qui sont reliés à un moteur (60) qui génère le son à manipuler,
- un mode de fonctionnement d'un moteur (60) qui génère le son à manipuler,
- une tension d'une batterie reliée à un moteur (60) qui génère le son à manipuler, et
- un état de fonctionnement d'un moteur (60) qui génère le son à manipuler.

**3.** Système selon la revendication 1 ou 2,
comprenant en outre un microphone (41), lequel mesure le son à manipuler et délivre en sortie un signal de mesure (d(n)) correspondant à celui-ci, dans lequel le régulateur (92) est conçu afin de générer le signal régulateur ($\lambda$(n)) en fonction du signal de mesure (d(n)) qui est délivré en sortie par le microphone (41) ; et/ou comprenant en outre une interface utilisateur (97), laquelle est conçue afin de recevoir une entrée utilisateur, dans lequel le régulateur (92) est conçu afin de générer le signal régulateur ($\lambda$(n)) en fonction de l'entrée utilisateur qui est reçue par le biais de l'interface utilisateur (97) ; et/ou
dans lequel le régulateur (92) est reliable à une commande moteur (61) d'un moteur et est conçu afin de générer le signal régulateur ($\lambda$(n)) en fonction de signaux qui sont reçus par la commande moteur (61), ou dans lequel le régulateur (92) est conçu afin de générer le signal régulateur ($\lambda$(n)) en fonction de signaux de capteur de vitesse de rotation d'un moteur.

**4.** Système selon l'une des revendications 1 à 3, dans lequel le générateur de signal (91) est en outre conçu afin de recevoir le vecteur d'onde d'entrée (x(n)) qui dépend du son à manipuler, et de générer le signal audio (y(n)) en fonction du vecteur d'onde d'entrée (x(n)).

**5.** Système selon la revendication 4, comprenant en outre un microphone (41) qui mesure le son à manipuler et délivre en sortie un signal de mesure (d(n)) correspondant à celui-ci, dans lequel le générateur de signal (91) est conçu afin de générer le signal sonore (y(n)) en fonction du signal de mesure (d(n)).

**6.** Système selon l'une des revendications 1 à 5, dans lequel le premier pondérateur (93) utilise à la place du signal sonore (y(n)) délivré en sortie par le générateur de signal (91) à un instant actuel un signal sonore (y(n-1)) délivré en sortie par le générateur de signal (91) à un instant antérieur.

**7.** Système selon la revendication 6, dans lequel les instants antérieurs (n-1) du signal (y(n-1)) délivré en sortie par le générateur de signal (91) précèdent le signal sonore (y(n)) délivré en sortie par le générateur de signal (91) à un instant actuel d'un simple ou multiple d'une fréquence d'impulsion interne du générateur de signal (91).

**8.** Véhicule automobile comprenant :

un moteur à combustion interne (60) avec une commande moteur (61) et/ou un capteur de vitesse de rotation ; et un système selon l'une des revendications 1 à 7 ;
dans lequel la commande moteur (61) et/ou le capteur de vitesse de rotation est relié au générateur de signal (91) et/ou au régulateur (92) et est conçu afin de déterminer une vitesse de rotation et/ou une charge moteur et/ou un couple du moteur à combustion interne (60) et de le délivrer en sortie comme vecteur d'onde d'entrée (x(n)) au générateur de signal (91) et/ou au régulateur (92).

**9.** Procédé pour influer activement sur le son, comprenant les étapes :

(S6) la génération d'un signal sonore (y(n)) ;
(S3) la mesure d'un son superposé généré à partir de la superposition du son généré en fonction du signal sonore (y(n)) avec le son à manipuler afin de recevoir un signal de rétroaction (e'(n)) correspondant ;
(S4) la génération d'un signal régulateur ($\lambda$(n)), dans lequel le signal régulateur ($\lambda$(n)) représente une valeur d'une séquence de nombres rationnels ;
(S5) la convolution de la transformée en z du signal sonore (y(n)) avec une estimation de la transformée en z de la fonction de transfert du générateur de son ($\hat{S}$(z)) et la pondération du signal reçu avec le signal régulateur ($\lambda$(n)) et l'inversion du signal pondéré ainsi reçu ;
(S5) l'addition du signal ainsi pondéré et inversé au signal de rétroaction (e'(n)) afin de recevoir un signal de rétroaction modifié (e(n)), dans lequel à l'étape de la génération du signal sonore (y(n)) le signal sonore (y(n)) est généré en utilisant le signal de rétroaction (e(n)) modifié ;
(S7) la pondération du signal sonore (y(n)) avec la différence de un et le signal régulateur ($\lambda$(n)) afin de recevoir un signal sonore (y'(n)) pondéré ; et
(S8) l'utilisation du signal sonore (y'(n)) pondéré pour la génération du son généré en fonction du signal sonore (y(n)) ;

dans lequel dans l'étape de génération du signal régulateur ($\lambda$(n)) le signal régulateur ($\lambda$(n)) est généré en utilisant un vecteur d'onde d'entrée (x(n)) qui dépend du son à manipuler.

**10.** Procédé selon la revendication 9, comprenant en outre :
(S11) la mesure du son à manipuler afin de recevoir un signal de mesure (d(n)) correspondant à celui-ci, dans lequel le signal régulateur est généré dans l'étape de la génération du signal régulateur en utilisant le signal de mesure (d(n)) ; et/ou (S12) la réception d'une entrée utilisateur, dans lequel le signal régulateur ($\lambda$(n)) est généré dans l'étape de la génération du signal régulateur ($\lambda$(n)) en fonction de l'entrée utilisateur.

**11.** Procédé selon la revendication 10, dans lequel le signal régulateur ($\lambda$(n)) dépend d'au moins un d'une vitesse de rotation ou charge moteur du moteur, une position de pédale d'accélérateur ou un gradient de pédale d'accélérateur, un état d'un embrayage ou d'une transmission, un mode de fonctionnement du moteur, une tension d'une batterie et un état de fonctionnement du moteur à combustion.

**12.** Procédé selon l'une des revendications 9 à 11, dans lequel à l'étape (S5) du pliage de la transformée en z du signal sonore (y(n)) avec une estimation de la transformée en z de la fonction de transfert du générateur de son ($\hat{S}$(z)) et la pondération du signal reçu avec le signal régulateur ($\lambda$(n)) et l'inversion du signal pondéré ainsi reçu un signal sonore (y(n-1)) correspondant à un instant plus tôt est utilisé à la place d'un signal sonore (y(n)) correspondant à un instant actuel.

**Fig. 1**

$CAN_{BUS}$

$V_{BATT}$

**Fig. 2**

**Fig. 3**

**Fig. 4A**

**Fig. 4B**

Magn[Geräusch($f$)]
[dB]

||d($f$)||
[dB]

Freq. [Hz]

$f_0$

## Fig. 5

GERÄUSCHQUELLE / FÜHRUNG

Verbrennungsmotor
60

Druck($n$)
Massenstrom($n$)
etc.

$P(z)$

Geräusch($n$)
d($n$)

AKTOR
20

$\Sigma$

+

−

u'($n$)

FEHLERSENSOR
(Mikrofon) 50

e'($n$)

akustischer Bereich

Drehzahl          elektrischer Bereich
x($n$)

$S(z)$

y'($n$)          95

Sinus-
Generator

sin($\omega_0 n$)

$w_1(n)$

$y_1(t)$

+

+        +

y($n$)

1−λ

Regler

cos($\omega_0 n$)

$w_2(n)$

$y_2(t)$

λ

93

Adaptationsschaltung

$\hat{S}(z)$

94

e($n$)

$\Sigma$

−        +

ANC-KERN                    92

ANC-ERWEITERUNG

91

96

## Fig. 6A

**Fig. 6B**

**Fig. 7**

BEGINN

S1 — Erhalten eines Eingangswellen-vektors x(n)

Empfangen einer Benutzereingabe S2

S3 — Messen eines überlagerten Schalls, um ein entsprechendes Rückkoppelsignal e'(n) zu erhalten S3

S4 — Erhalten eines Regelsignals λ(n) aus der Bedatung $\Xi(params)$, welche u.a. von einem Betriebszustand der Geräuschquelle abhängt:

$$\lambda(n) = \Xi(params),$$

wobei das Regelsignal λ(n) ein Wert einer Folge von rationalen Zahlen ist

S5 — Erhalten eines modifizierten Rückkoppelsignals e(n) aus dem gemessenen Rückkoppelsignal e'(n), einem Wert λ des Regelsignals λ(n), einer Impulsantwort ŝ(n) einer abgeschätzten Übertragungsfunktion des Schallerzeugers Ŝ(z) und einem vom ANC-Kern zu einem früheren Zeitpunkt an einen Schallerzeuger ausgegebenen (Schall-)Signal y(n-1) zu

$$e(n) = e'(n) - \lambda \, conv[ŝ(n), y(n-1)]$$

S6 — Berechnen eines Schallsignals y(n) anhand der Übertragungsfunktion der Geräuschquelle P(z), des Eingangswellenvektors x(n) und des modifizierten Rückkoppelsignals e(n)

S7 — Gewichten des berechneten Schallsignals y(n) mit der Differenz aus Eins und dem Regelsignal λ(n), um ein gewichtetes Schallsignal y'(n) zu erhalten $y'(n) = (1-\lambda) \, y(n)$

S8 — Ausgeben des gewichteten Schallsignal y'(n) zur Erzeugung eines Audiosignals an einen Schallerzeuger

ENDE

# Fig. 8

Schalldruckpegel [dB(A)]

| Absenkung | Aus | Anhebung |

55

45

35

········ ANC AN

——— ANC AUS

- - - Druckpegel Aktor

1    2    3    Zeit [sek.]

## Fig. 9A

Schalldruckpegel [dB(A)]

44

40

36

········ ANC AN

——— ANC AUS

- - - Druckpegel Aktor

1    2    3    Zeit [sek.]

## Fig. 9B

Schalldruckpegel [dB(A)]

120

100

80

Erfindung

Stand    der Technik

ANC AN

——— ANC AUS

1000    3000    5000 [1/min]

Drehzahl

## Fig. 10

**Fig. 11A**

**Fig. 11B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SEN M. KUO ; DENNIS R. MORGAN.** Active Noise Control: A tutorial review. *Proceedings of the IEEE,* Juni 1999, vol. 87 (6